# EUROPEAN PATENT APPLICATION

(11) **EP 4 539 484 A1**
(43) Date of publication of application: **16.04.2025**
(21) Application number: 23826202.6
(22) Date of filing: 13.06.2023
(51) Int. Cl.: H04N 23/54

(54) **DRIVING DEVICE AND CAMERA MODULE**

(30) Priority: 20.06.2022 CN 202210698530; 20.06.2022 CN 202210697397; 20.06.2022 CN 202210698516
(71) Applicant: Ningbo Sunny Opotech Co., Ltd., Ningbo, Zhejiang 315400 (CN)
(72) Inventor: ZHAO, Bojie, Ningbo, Zhejiang 315400 (CN); YAO, Lifeng, Ningbo, Zhejiang 315400 (CN); WANG, Mingzhu, Ningbo, Zhejiang 315400 (CN)
(74) Representative: Dehns Germany Partnerschaft mbB
(86) International application number: PCT/CN2023/099792
(87) International publication number: WO 2023/246553

(57) **Abstract**

Disclosed in the present invention are a driving device and a camera module. The driving device comprises a fixing part; an anti-shake frame, which is movably connected to the fixing part; a focusing carrier, which is movably connected to the anti-shake frame; a magnet part, which is arranged at the anti-shake frame; a focusing coil part, which is arranged at the focusing carrier and is opposite the magnet part; an anti-shake coil part, which is arranged at the fixing part and is opposite the magnet part; and a focusing position sensing part, which comprises a focusing position sensing element and a focusing position sensing magnet, and the focusing position sensing element being arranged at one of the focusing carrier and the anti-shake frame, and the focusing position sensing magnet being arranged at the other one of the focusing carrier and the anti-shake frame, and the focusing position sensing element being arranged opposite to the focusing position sensing magnet in a height direction.

## Description

### Technical Field

The present invention relates to the technical field of camera modules, and in particular to a driving device and a camera module using the driving device.

### Background

With the popularization of mobile electronic devices, the relevant technologies of camera modules applied to mobile electronic devices for helping users to obtain images have been rapidly developed and improved. Currently in the market, consumers have increasingly higher and more diverse requirements for the functions of camera modules configured in mobile electronic devices (e.g., smart phones), such as focusing function and anti-shake function.

At the time of using a mobile electronic device to shoot objects at different distances, the distance between the optical lenses and the photosensitive assembly is adjusted through a driving device to achieve a focusing function.

Also, at the time of using mobile electronic devices to take pictures, the camera effect will be reduced due to the physiological tremors of a certain frequency existing in the human body under normal circumstances and the jitter caused by movement. Therefore, mobile electronic devices are usually equipped with anti-shake devices to make the optical lenses translate or rotate relative to the photosensitive assembly to achieve the anti-shake function.

Therefore, an excellent driving device and camera module are expected to meet consumers' demands for focusing function and/or anti-shake function.

### Summary

One object of the present invention is to provide a driving device and a camera module, which overcome the deficiencies of the prior art and have excellent focusing function and/or anti-shake function, and are suitable for achieving clear imaging.

According to a first aspect of the present invention, provided is a driving device comprising:
a fixing part;
an anti-shake frame, which is movably connected to the fixing part;
a focusing carrier, which is movably connected to the anti-shake frame;
a magnet part, which is arranged on the anti-shake frame;
a focusing coil part, which is arranged at the focusing carrier and is opposite to the magnet part;
an anti-shake coil part, which is arranged at the fixing part and is opposite to the magnet part; and
a focusing position sensing part, which comprises a focusing position sensing element and a focusing position sensing magnet, wherein the focusing position sensing element is arranged at one of the focusing carrier and the anti-shake frame, and the focusing position sensing magnet is arranged at the other of the focusing carrier and the anti-shake frame, and the focusing position sensing element is arranged opposite to the focusing position sensing magnet in a height direction.

In some examples, the focusing carrier comprises a carrier body and a side extension portion, and the side extension portion extends outward from the carrier body, and the focusing position sensing element is fixed at the side extension portion, and the focusing position sensing magnet is fixed at the top of the anti-shake frame, and the focusing position sensing element is located above the focusing position sensing magnet.

In some examples, the magnet part comprises a first magnet, and the anti-shake coil part comprises a first anti-shake coil, and the first anti-shake coil is fixed at the fixing part and is opposite to the first magnet.

In some examples, the magnet part further comprises a second magnet and a third magnet, and the second magnet and the third magnet are arranged opposite to each other at both sides of the first magnet, and the focusing coil part comprises a first focusing coil and a second focusing coil, and the first focusing coil is fixed at the focusing carrier and is opposite to the second magnet, and the second focusing coil is fixed at the focusing carrier and is opposite to the third magnet, and the anti-shake coil part further comprises a second anti-shake coil and a third anti-shake coil, and the second anti-shake coil is fixed at the fixing part and is opposite to the second magnet, and the third anti-shake coil is fixed at the fixing part and is opposite to the third magnet.

In some examples, the focusing position sensing part and the first magnet are located at the same side of the focusing carrier, and the focusing position sensing magnet is arranged above the first magnet.

In some examples, the first magnet comprises a first magnetic force part and a second magnetic force part, and the first magnetic force part and the second magnetic force part are stacked, and the second magnetic force part is located at the side of the first magnetic force part away from the focusing carrier, and the magnetic pole direction of the focusing position sensing magnet is the same as the magnetic pole direction of the first magnetic force part.

In some examples, the height of a top surface of the first magnet is lower than the heights of top surfaces of the second magnet and the third magnet.

In some examples, the anti-shake frame further comprises a frame body and a first magnetic conductive member fixed at the frame body, and the first magnetic conductive member is arranged between the focusing position sensing magnet and the first magnet.

In some examples, the driving device further comprises a suspension part and a supporting part, and the suspension part connects the focusing carrier and the anti-shake frame so that the focusing carrier is suspended in the anti-shake frame, and the supporting part is arranged between the anti-shake frame and the fixing part, and the anti-shake frame is supported by the supporting part at the fixing part.

According to a second aspect of the present invention, provided is a camera module comprising:
a photosensitive assembly;
an optical lenses, which is held on the photosensitive path of the photosensitive assembly; and
a driving device, which is suitable for driving the optical lenses to move.

According to one aspect of the present invention, provided is a driving device comprising:
a base, which comprises a base body and a magnetic attraction assembly arranged at the base body;
an anti-shake frame, which is movably connected to the base;
an anti-shake coil part, which is arranged at the base body; and
a magnet part, which is arranged at the anti-shake frame, wherein the magnet part is arranged opposite to the anti-shake coil part, and the magnet part comprises a first magnet, a second magnet and a third magnet, and the second magnet and the third magnet are arranged opposite to each other at both sides of the first magnet;
wherein the magnetic attraction assembly is only arranged opposite to the second magnet and the third magnet in a height direction.

In some examples, the magnetic attraction assembly comprises a first magnetic attraction part and a second magnetic attraction part, and the first magnetic attraction part and the second magnet are arranged opposite to each other in a height direction, and the second magnetic attraction part and the third magnet are arranged opposite to each other in a height direction.

In some examples, the first magnetic attraction part interacts with the second magnet to generate a first magnetic attraction force, and the second magnetic attraction part interacts with the third magnet to generate a second magnetic attraction force, and the first magnetic attraction force and the second magnetic attraction force are mutually symmetrical forces.

In some examples, the first magnetic attraction part and the second magnetic attraction part are arranged at opposite sides of the base body, and do not extend to the corners of the base body.

In some examples, the first magnetic attraction part and the second magnetic attraction part are set at the side of the base body opposite to the second magnet and the third magnet, and the first magnetic attraction part and the second magnetic attraction part are not set at the side of the base body opposite to the first magnet, and the first magnetic attraction part and the second magnetic attraction part would only be attracted by the magnetic force of the second magnet and the third magnet, but not by the magnetic force of the first magnet.

In some examples, the first magnetic attraction part comprises a first magnetic attraction member and a second magnetic attraction member, and the first magnetic attraction member and the second magnetic attraction member are symmetrically arranged below the second magnet, and the second magnetic attraction part comprises a third magnetic attraction member and a fourth magnetic attraction member, and the third magnetic attraction member and the fourth magnetic attraction member are symmetrically arranged below the third magnet.

In some examples, the first magnetic attraction member and the second magnetic attraction member extend along the length direction of the second magnet, and the first magnetic attraction member and the second magnetic attraction member are arranged at intervals in the length direction of the second magnet, and the third magnetic attraction member and the fourth magnetic attraction member extend along the length direction of the third magnet, and the third magnetic attraction member and the fourth magnetic attraction member are arranged at intervals in the length direction of the third magnet.

In some examples, the first magnetic attraction member and the second magnetic attraction member are separately arranged along the length direction of the second magnet, and the first magnetic attraction member and the second magnetic attraction member are respectively located at two ends of the second magnet, and the third magnetic attraction member and the fourth magnetic attraction member are separately arranged along the length direction of the third magnet, and the third magnetic attraction member and the fourth magnetic attraction member are respectively located at two ends of the third magnet.

In some examples, the driving device further comprises a focusing carrier and a focusing coil part arranged at the focusing carrier, and the focusing coil part comprises a first focusing coil and a second focusing coil, and the first focusing coil and the second magnet are arranged opposite to each other in a horizontal direction, and the second focusing coil and the third magnet are arranged opposite to each other in a horizontal direction, and the anti-shake coil part comprises a first anti-shake coil, a second anti-shake coil and a third anti-shake coil, and the first anti-shake coil and the first magnet are arranged opposite to each other in a height direction, and the second anti-shake coil and the second magnet are arranged opposite to each other in a height direction, and the third anti-shake coil and the third magnet are arranged opposite to each other in a height direction.

According to one aspect of the present invention, provided is a camera module comprising:
a photosensitive assembly;
an optical lenses, which is held on the photosensitive path of the photosensitive assembly; and
a driving device, which is suitable for driving the optical lenses to move.

According to one aspect of the present invention, provided is a driving device comprising:
a fixing part;
an anti-shake frame, which is movably connected to the fixing part;
a focusing carrier, which is movably connected to the anti-shake frame;
a magnet part, which is arranged at the anti-shake frame;
a focusing coil part, which is arranged at the focusing carrier and is opposite to the magnet part;
an anti-shake coil part, which is arranged at the fixing part and is opposite to the magnet part; and
a focusing position sensing part, which comprises a focusing position sensing element and a focusing position sensing magnet arranged opposite to each other in a height direction, wherein the anti-shake frame comprises a frame body which comprises a first side portion, a second side portion, a third side portion and a fourth side portion sequentially arranged in a counterclockwise direction, and the second side portion and the fourth side portion are arranged opposite to each other at both sides of the first side portion, and the top surface of the first side portion is lower than the top surfaces of the second side portion and the fourth side portion, and the focusing position sensing magnet is arranged at the first side portion.

In some examples, the focusing carrier comprises a carrier body and a side extension portion, and the side extension portion extends outward from the carrier body, and the focusing position sensing element is fixed at the side extension portion, and the focusing position sensing magnet is fixed at the top of the first side portion, and the focusing position sensing element is located above the focusing position sensing magnet.

In some examples, the magnet part comprises a first magnet, a second magnet and a third magnet, and the first magnet is fixed at the first side portion, and the second magnet is fixed at the second side portion, and the third magnet is fixed at the fourth side portion, and the anti-shake coil part comprises a first anti-shake coil, a second anti-shake coil and a third anti-shake coil, and the first anti-shake coil is fixed at the fixing part and is opposite to the first magnet, and the second anti-shake coil is fixed at the fixing part and is opposite to the second magnet, and the third anti-shake coil is fixed at the fixing part and is opposite to the third magnet, and the focusing coil part comprises a first focusing coil and a second focusing coil, and the first focusing coil is fixed at the focusing carrier and is opposite to the second magnet, and the second focusing coil is fixed at the focusing carrier and is opposite to the third magnet.

In some examples, the height of the top surface of the first magnet is lower than the heights of the top surfaces of the second magnet and the third magnet, and the focusing position sensing magnet is arranged above the first magnet.

In some examples, the first magnet comprises a first magnetic force part and a second magnetic force part, and the first magnetic force part and the second magnetic force part are stacked, and the second magnetic force part is located at the side of the first magnetic force part away from the focusing carrier, and the magnetic pole direction of the focusing position sensing magnet is the same as the magnetic pole direction of the first magnetic force part.

In some examples, the anti-shake frame further comprises a first magnetic conductive member fixed at the first side portion, and the first magnetic conductive member is arranged between the focusing position sensing magnet and the first magnet.

In some examples, the driving device further comprises a first spring plate, and the first spring plate connects the focusing carrier and the anti-shake frame so that the focusing carrier is suspended in the anti-shake frame, and the first spring plate comprises a first part, a second part, a third part and a fourth part sequentially arranged in a counterclockwise direction, and the first part and the second part, and the fourth part and the third part, are symmetrically arranged on both sides, and the focusing position sensing element is arranged between the first part and the fourth part.

In some examples, the focusing position sensing part further comprises a focusing circuit board providing a conducting circuit for the focusing position sensing element, and the first part, the second part, the third part and the fourth part are electrically connected to the focusing circuit board respectively.

In some examples, the driving device further comprises a supporting part, and the supporting part is arranged between the anti-shake frame and the fixing part, and the anti-shake frame is supported by the supporting part at the fixing part.

According to one aspect of the present invention, provided is a camera module comprising:
a photosensitive assembly;
an optical lenses, which is held on the photosensitive path of the photosensitive assembly; and
a driving device, which is suitable for driving the optical lenses to move.

Compared with the prior art, the present invention has at least one of the following technical effects:
1. By arranging the focusing position sensing element and the focusing position sensing magnet in a height direction, the lateral size of the driving device is reduced.
2. By multi-using magnets, the second magnet and the third magnet are used to drive the anti-shake coil part and the focusing coil part at the same time, thereby optimizing the internal structure of the driving device and simplifying the structure and reducing the size of the driving device.
3. The focusing position sensing magnet is arranged above the first magnet, so that the top surface of the first magnet is lower than the top surface of the second magnet or the third magnet, thereby reducing the height of the driving device.

Additional examples and features are partly set forth in the description hereinafter, and will become apparent to those skilled in the art upon reading the description, or may be learned by practice of the disclosed subject matter. A further understanding of the nature and advantages of the present disclosure may be realized by referring to the remaining portions of the specification and drawings which constitute a part of this application.

### Brief Description of the Drawings

Fig. 1 is a cross-sectional schematic diagram of a camera module according to an implementation mode of the present invention;
Fig. 2 is a perspective exploded schematic diagram of a driving device according to an implementation mode of the present invention;
Fig. 3 is a schematic structural diagram of a driving device after housing remove according to an implementation mode of the present invention;
Fig. 4 is a cross-sectional schematic diagram of a driving device according to an implementation mode of the present invention;
Fig. 5 is another cross-sectional schematic diagram of a driving device according to an implementation mode of the present invention;
Fig. 6 is a schematic diagram of a magnet part, a focusing coil part, and an anti-shake coil part of a driving device according to an implementation mode of the present invention;
Fig. 7 is a schematic structural diagram of a focusing carrier of a driving device according to an implementation mode of the present invention;
Fig. 8 is a perspective exploded schematic diagram of an anti-shake frame of a driving device according to an implementation mode of the present invention;
Fig. 9 is a perspective exploded schematic diagram of a base of a driving device according to an implementation mode of the present invention;
Fig. 10 is a schematic structural diagram of a base, a magnet part, a focusing coil part, and an anti-shake coil part of a driving device according to an implementation mode of the present invention;
Fig. 11 is a schematic structural diagram of a base, a suspension part, a position sensing part, and a side connection part of a driving device according to an implementation mode of the present invention;
Fig. 12 is a schematic top view of an array module according to an implementation mode of the present invention.

### Detailed Description of the Embodiments

Below, the present invention is further described in conjunction with specific implementation modes. It should be noted that, under the premise of no conflict, the various examples or technical features described below can be arbitrarily combined to form new examples.

The term "comprising" is open-ended. As used in the appended claims, this term does not exclude additional structures or steps.

In the description of the present invention, it should be noted that directional words, such as the terms "center", "lateral", "longitudinal", "length", "width", "thickness", "up", "down", "front", "back", "left", "right", "vertical", "horizontal", "top", "bottom", "inside", "outside", "clockwise", "counterclockwise", etc., indicating directions and positional relationships are based on the directions or positional relationships shown in the accompanying drawings, which are only for the convenience of narrating the present invention and simplifying the description, and do not indicate or imply that the device or element referred to must have a specific orientation, be constructed and operated in a specific orientation, and cannot be understood as limiting the specific protection scope of the present invention.

It should be noted that the terms "first", "second", etc. in the description and claims of the present invention are used to distinguish similar objects, and are not necessarily used to describe a specific order or sequence.

The terms "comprise/comprising" or "include/including" and "have/has/having" and any variations thereof in the specification and claims of this application, are intended to cover non-exclusive inclusions. For example, a process, method, system, product or apparatus comprising a series of steps or units is not necessarily limited to those steps or units explicitly listed, but may comprise other steps or units not explicitly listed or inherent to these processes, methods, products or apparatuses.

It should be noted that, as used in this application, the terms "substantially", "approximately" and similar terms are used as terms to express approximation rather than as terms to express degree, and are intended to account for the inherent deviations in measurements or calculations that would be recognized by a person of ordinary skill in the art.

In the description of the present invention, it should also be noted that, unless otherwise clearly specified and limited, the terms "set", "installed", "connected" and "connecting/connection" should be understood in a broad sense. For example, it can be a fixed connection, a detachable connection, or an integral connection; it can be a mechanical connection or an electrical connection; it can be a direct connection, a contact connection or an indirect connection through an intermediate medium, and it can be the internal connection of two elements. For those skilled in the art, the specific meanings of the above terms in this application can be understood according to specific circumstances.

Various units, circuits, or other components may be described or recited as being "configured to" perform one or more tasks. In such contexts, "configured to" is used to imply a structure by indicating that a unit/circuit/component comprises this structure (e.g., circuitry) that performs the task or tasks during operation. Furthermore, "configured to" may comprise general purpose structures (e.g., general circuits) manipulated by software and/or firmware to operate in a manner capable of performing the task or tasks to be addressed. "Configured to" may further comprise adapting a manufacturing process (e.g., a semiconductor fabrication facility) to produce a device (e.g., an integrated circuit) suitable for implementing or performing one or more tasks.

The terminology used in the description herein is for the purpose of describing particular examples only, and is not intended to be limiting. As used in the specification and the appended claims, the singular forms "a", "an" and "the" are intended to comprise the plural forms as well, unless the context clearly indicates otherwise. It will also be understood that, the term "and/or" as used herein refers to and encompasses any and all possible combinations of one or more of the associated listed items. It will also be understood that, the terms "include/including" and/or "comprise/comprising" when used in this specification specify the presence of the stated features, integers, steps, operations, elements and/or components, but do not preclude the presence or addition of one or more other features, integers, steps, operations, elements, components and/or a group thereof.

As used herein, based on the context the term "if" may be interpreted to mean "upon... /at the time of...", or "when", or "in response to determining", or "in response to detecting". Similarly, depending on the context, the phrase "if it is determined that..." or "if [the stated condition or event] is detected" may be interpreted to mean "upon determining..." "when" or "in response to determining..." or "upon detection of [the stated condition or event]" or "in response to detection of [the stated condition or event]."

### Exemplary Camera Module

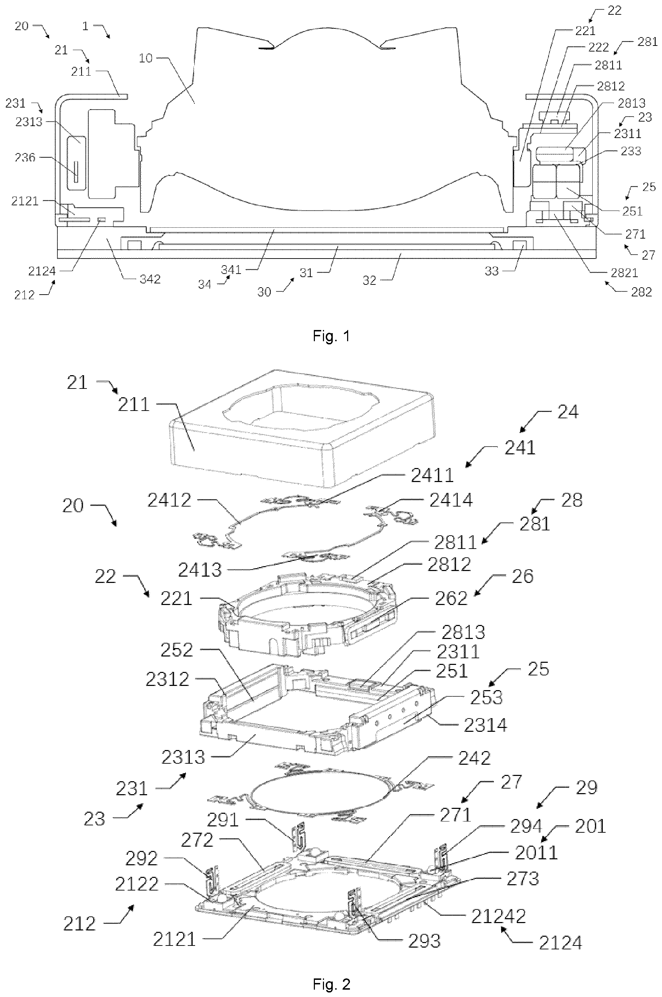

Figs. 1-11 show a driving device 20 and a camera module 1 according to the present invention. As shown in Fig. 1, a camera module 1 according to an example of the present invention is illustrated, which comprises: a photosensitive assembly 30, an optical lenses 10 held on the photosensitive path of the photosensitive assembly 30, and a driving device 20 for driving the optical lenses 10 to move to achieve optical performance adjustment, for example, for achieving functions such as optical anti-shake and optical focusing.

Correspondingly, the optical lenses 10 comprise a lens barrel and a plurality of optical lens pieces mounted in the lens barrel. The optical lenses 10 have an optical axis, which is also the optical axis of the plurality of optical lens pieces. The photosensitive assembly 30 is arranged opposite to the optical lenses 10 along the optical axis direction. For the convenience of description, the side of the camera module 1 facing the subject is referred to as the object side, and the side of the camera module 1 facing the photosensitive assembly 30 is referred to as the image side, and the direction of the optical axis comprises the direction along the optical axis pointing to the image side (referred to as the image side in this application), and the direction along the optical axis pointing to the object side (referred to as the object side in this application), and the horizontal direction is a direction perpendicular to the optical axis direction, and a height direction is a direction along the optical axis direction.

Further referring to Fig. 1, the optical lenses 10 is fixed in the driving device 20, and the photosensitive assembly 30 is fixed at the image side of the driving device 20. Thus, the optical lenses 10 can be held on the photosensitive path of the photosensitive assembly 30 by the driving device 20. The optical lenses 10 is suitable for being driven by the driving device 20 to realize functions such as optical anti-shake and optical focusing.

The photosensitive assembly 30 comprises: a chip circuit board 32 and a photosensitive chip 31 and an electronic element 33 which are electrically connected to the chip circuit board 32. The photosensitive chip 31 is used to receive external light imaging collected by the optical lenses 10, and is electrically connected to an external mobile electronic device through the chip circuit board 32. In an example of the present invention, the electronic element 33 may be one or more selected from the group consisting of: a passive electronic device (such as a resistor, or a capacitor), and an active electronic device (such as a drive chip, or a memory chip).

The photosensitive assembly 30 further comprises a filter assembly 34, which comprises a filter element 341. The filter element 341 is held on the photosensitive path of the photosensitive chip 31. The filter element 341 is arranged between the optical lenses 10 and the photosensitive chip 31, and is used to filter the incident light entering the photosensitive chip 31, and filter out the stray light (such as infrared light) unnecessary for imaging in the incident light.

The filter assembly 34 further comprises a filter element bracket 342. The filter element 341 is mounted and fixed on the filter element bracket 342, and corresponds to at least the photosensitive area of the photosensitive chip 31. The filter element bracket 342 has a light hole. The incident light passing through the optical lenses 10 can be incident on the photosensitive chip 31 through the light hole. The filter element 341 can be attached to the filter element bracket 342 upright or upside down. Furthermore, the filter element bracket 342 is fixed on the chip circuit board 32. In one example of the present invention, the photosensitive assembly 30 is fixed at the image side of the driving device 20 via the filter element bracket 342. In another example of the present invention, the photosensitive assembly 30 can also be fixed at the image side of the driving device 20 via the chip circuit board 32. The filter element bracket 342 can be prefabricated, and then fixed on the chip circuit board 32 by, for example, bonding with an adhesive medium, or it can be integrally formed on the chip circuit board 32 by, for example, a molding process, and directly fixed on the chip circuit board 32 by integral molding. The present invention is not limited to this.

### Exemplary Driving device

The driving device 20 of the present invention can drive the optical lenses 10 to move along the Z-axis direction to adjust the distance between the optical lenses 10 and the photosensitive assembly 30 to achieve a focusing function, and the driving device 20 can drive the optical lenses 10 to move in the X-axis direction and/or the Y-axis direction to make the optical lenses 10 translate relative to the photosensitive assembly 30 to achieve an anti-shake function. In the example of the present invention, the X-axis direction and the Y-axis direction are perpendicular to each other, and the Z-axis direction is perpendicular to the plane where the X-axis direction and the Y-axis direction are located. In other words, the X-axis, the Y-axis and the Z-axis constitute a three-dimensional coordinate system, and the XOY plane where the X-axis direction and the Y-axis direction are located is also called a plane where the horizontal direction is located, and the Z-axis approaches the optical axis direction or a direction parallel to the optical axis.

As shown in Figs. 1-11, the driving device 20 comprises: a fixing part 21, a focusing carrier 22, an anti-shake frame 23, a suspension part 24, a supporting part 201, a magnet part 25, a focusing coil part 26 and an anti-shake coil part 27. Particularly, the focusing carrier 22, the anti-shake frame 23, the suspension part 24, the supporting part 201, the magnet part 25, the focusing coil part 26 and the anti-shake coil part 27 are accommodated in the fixing part 21, and the magnet part 25 is arranged at the anti-shake frame 23, and the focusing coil part 26 is arranged at the focusing carrier 22 and opposite to the magnet part 25, and the anti-shake coil part 27 is arranged at the fixing part 21 and opposite to the magnet part 25.

The fixing part 21 comprises a housing 211 and a base 212. The housing 211 and the base 212 are interlocked to form an accommodating cavity of the fixing part 21 to accommodate components such as the focusing carrier 22, the anti-shake frame 23, the suspension part 24, the supporting part 201, the magnet part 25, the focusing coil part 26 and the anti-shake coil part 27. On one hand, it can prevent dust from entering, and on the other hand, it can prevent the components from falling off when they are hit. The housing 211 and the base 212 of the fixing part 21 are both stators. When the driving device 20 drives the optical lenses 10 to move, the fixing part 21 remains relatively fixed, and other components move relative to the fixing part 21. In one example of the present invention, the photosensitive assembly 30 is fixed at the base 212 of the fixing part 21, and thus the photosensitive assembly 30 also becomes a relatively fixed part. The housing 211 and the base 212 each have a light hole, so that the imaging light can be incident on the optical lenses 10 fixed at the driving device 20, and can be emitted from the optical lenses 10 to be incident on the photosensitive assembly 30.

The anti-shake frame 23 is movably connected to the fixing part 21, the focusing carrier 22 is movably connected to the anti-shake frame 23, and the optical lenses 10 is fixed at the focusing carrier 22, so that when the focusing carrier 22 is driven by the driving device 20, the optical lenses 10 moves with the focusing carrier 22. In one example of the present invention, the focusing carrier 22 has a through hole, and the optical lenses 10 are fixed in the through hole of the focusing carrier 22. Particularly, the optical lenses 10 can be fixed at the focusing carrier 22 by, for example, bonding with an adhesive medium or welding, or can be fixed at the focusing carrier 22 by integrally forming the lens barrel of the optical lenses 10 and the focusing carrier 22, the present invention is not limited thereto. The focusing carrier 22 is movably arranged at the inner side of the anti-shake frame 23, and the anti-shake frame 23 is movably arranged between the focusing carrier 22 and the fixing part 21. In one example of the present invention, the anti-shake frame 23 is movably arranged above the base 212, and the anti-shake frame 23 has a through hole, and the focusing carrier 22 is accommodated in the through hole of the anti-shake frame 23.

The focusing carrier 22 comprises: a carrier body 221, and a side extension portion 222 extending outward from the carrier body 221. The optical lenses 10 are fixed at the carrier body 221, which has a through hole suitable for accommodating the optical lenses 10. The side extension portion 222 is located above the carrier body 221 (object side). The side extension portion 222 and the carrier body 221 form a space that can accommodate the anti-shake frame 23.

Referring to Figs. 2-4, the suspension part 24 is mounted at the anti-shake frame 23, and the focusing carrier 22 is mounted at the suspension part 24 in suspension, so that the focusing carrier 22 is suspended in the anti-shake frame 23. In other words, the suspension part 24 connects the focusing carrier 22 and the anti-shake frame 23, and the focusing carrier 22 and the anti-shake frame 23 are respectively fixed at the suspension part 24, and the focusing carrier 22 is suspended in the anti-shake frame 23, so that when the focusing carrier 22 moves relative to the anti-shake frame 23, friction between the focusing carrier 22 and the anti-shake frame 23 is avoided, and the focusing carrier 22 is movably connected to the anti-shake frame 23.

In an example of the present invention, the suspension part 24 suspends the focusing carrier 22 in the anti-shake frame 23, and the suspension part 24 comprises a first spring plate 241 and a second spring plate 242 which are arranged at intervals at the driving device 20 in a height direction. Particularly, the first spring plate 241 is located at the object side of the focusing carrier 22, and the second spring plate 242 is located at the image side of the focusing carrier 22, so as to suspend the focusing carrier 22 in the anti-shake frame 23 in a resettable manner.

Particularly, the first spring plate 241 and the second spring plate 242 have a foliated structure as a whole. The first spring plate 241 is respectively connected to the top surface of the anti-shake frame 23 and the top surface of the focusing carrier 22, and the second spring plate 242 is respectively connected to the bottom surface of the anti-shake frame 23 and the bottom surface of the focusing carrier 22, so as to support and limit the movement of the focusing carrier 22, which not only helps to improve the structural stability of the driving device 20, but also enables the focusing carrier 22 to move within a certain range of stroke.

Particularly, in one example of the present invention, the suspension part 24 comprises an outer contour fixed at the anti-shake frame 23, an inner contour fixed at the focusing carrier 22, and a deformation portion integrally connecting the outer contour and the inner contour. Particularly, the deformation portion is bent and extended from the outer contour to the inner contour so as to reserve sufficient space for the movement of the focusing carrier 22, which can not only provide protection for the moving stroke of the focusing carrier 22, but also reduce the driving resistance of the focusing carrier 22 and improve the optical focusing sensitivity of the driving device 20. It should be understood that, when the length of the deformation portion is longer and the deformation portion has more bends, the deformation of the deformation portion itself is very small after the deformation occurs, and it is easier to restore the deformation portion after being stretched. In a particular example of the present invention, the deformation portion is an elastic linear structure made of an elastic material (such as rubber, plastic, etc.). In another particular example of the present invention, the deformation portion may also be an elastic linear structure made of a rigid material (such as metal, etc.).

Furthermore, the outer contour of the first spring plate 241 is fixed at the top surface of the anti-shake frame 23, and the inner contour of the first spring plate 241 is fixed at the top surface of the focusing carrier 22, and the deformation portion of the first spring plate 241 integrally connects the outer contour of the first spring plate 241 and the inner contour of the first spring plate 241, and the outer contour of the second spring plate 242 is fixed at the bottom surface of the anti-shake frame 23, and the inner contour of the second spring plate 242 is fixed at the bottom surface of the focusing carrier 22, and the deformation portion of the second spring plate 242 integrally connects the outer contour of the second spring plate 242 and the inner contour of the second spring plate 242. This arrangement enables the focusing carrier 22 to be clamped between the first spring plate 241 and the second spring plate 242, so that the focusing carrier 22 is suspended in the anti-shake frame 23.

More particularly, in one example of the present invention, the inner contour and the outer contour of the first spring plate 241 can be fixedly attached to the focusing carrier 22 and the anti-shake frame 23 by means of but not limited to bonding or hot riveting, and the inner contour and the outer contour of the second spring plate 242 can be fixedly attached to the focusing carrier 22 and the anti-shake frame 23 by means of but not limited to bonding or hot riveting. When the focusing carrier 22 is driven to move along the Z-axis direction, the first spring plate 241 and the second spring plate 242 are deformed to accumulate elastic force. When the focusing carrier 22 stops being driven, the elastic force accumulated by the first spring plate 241 and the second spring plate 242 is released, thereby driving the focusing carrier 22 to return to its original position.

Furthermore, in one example of the present invention, the first spring plate 241 has a split structure, and the second spring plate 242 has an integrated structure. The first spring plate 241 can be used to achieve circuit conduction of the driving device 20, and the second spring plate 242 can always maintain good consistency during the installation process, so that the entire plane of the second spring plate 242 produces less installation tolerance. In another example of the present invention, the first spring plate 241 has an integrated structure, and the second spring plate 242 has a split structure. **The** second spring plate 242 can be used to achieve circuit conduction of the driving device 20, and the first spring plate 241 can always maintain good consistency during the installation process, so that the entire plane of the first spring plate 241 produces less installation tolerance. In another example of the present invention, the first spring plate 241 and the second spring plate 242 both have a split structure, and the first spring plate 241 and the second spring plate 242 can both be used to achieve circuit conduction of the driving device 20. In another example of the present invention, the first spring plate 241 and the second spring plate 242 both have an integrated structure, and the first spring plate 241 and the second spring plate 242 can always maintain good consistency during the installation process, so that the entire plane of the first spring plate 241 and the second spring plate 242 produces less installation tolerance.

As shown in Figs. 2-3, in one example of the present invention, the first spring plate 241 connects the focusing carrier 22 and the anti-shake frame 23 so that the focusing carrier 22 is suspended in the anti-shake frame 23, and the first spring plate 241 comprises a first part 2411, a second part 2412, a third part 2413 and a fourth part 2414 which are arranged in sequence in a counterclockwise direction. Particularly, the first part 2411, the second part 2412, the third part 2413 and the fourth part 2414 are respectively connected to the four corners of the focusing carrier 22 and the anti-shake frame 23, so as to provide more stable support for the focusing carrier 22 and provide symmetrical restoring force for the focusing carrier 22.

Particularly, in one example of the present invention, the first part 2411, the second part 2412 and the third part 2413, the fourth part 2414 are axially symmetrically arranged with respect to the X-axis direction or the Y-axis direction, that is, the first spring plate 241 is an axisymmetric structure. In other words, the first part 2411 and the second part 2412, and the fourth part 2414 and the third part 2413, are symmetrically arranged at both sides. When the focusing carrier 22 moves along the Z-axis direction, the axisymmetric first spring plate 241 can suppress the focusing carrier 22 from moving a rotationally around the Z-axis. Furthermore, the axisymmetric first spring plate 241 can further improve the flatness of the first spring plate 241, so as to reduce the tilt tolerance of the driving device 20 and improve the assembly accuracy of the driving device 20.

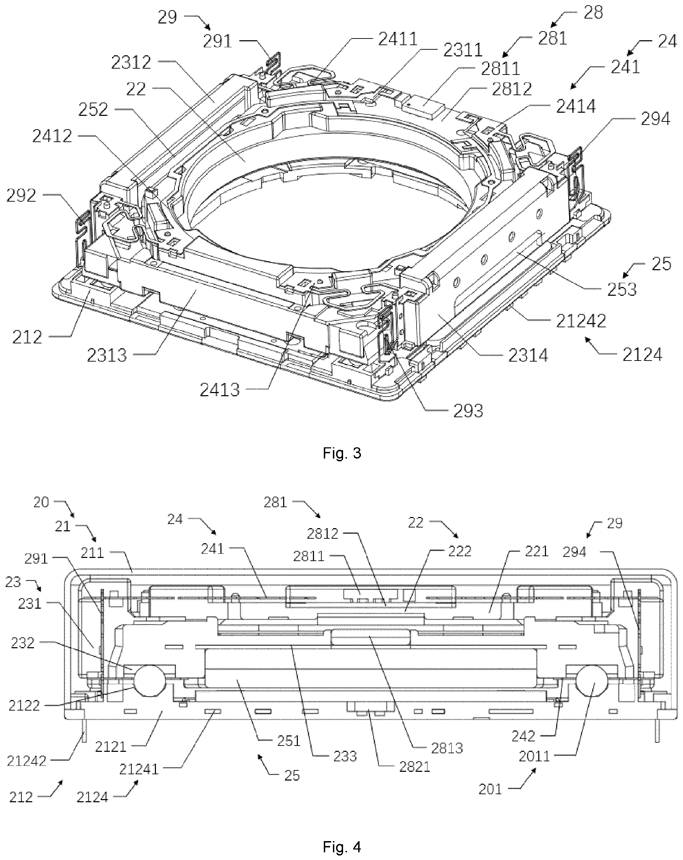

Further referring to Figs. 4 and 9-10, the supporting part 201 is arranged between the anti-shake frame 23 and the fixing part 21, and the anti-shake frame 23 is supported at the fixing part 21 by the supporting part 201. Particularly, the supporting part 201 is arranged between the anti-shake frame 23 and the base 212, and the anti-shake frame 23 is supported at the base 212 by the supporting part 201, so that when the anti-shake frame 23 moves relative to the base 212, friction between the anti-shake frame 23 and the base 212 is avoided, and the anti-shake frame 23 is movably supported at the base 212. In a particular example, the supporting part 201 provides an air gap of a fixed size between the anti-shake frame 23 and the base 212, thereby reducing the friction force that may be generated when the anti-shake frame 23 moves relative to the base 212.

During the movement of the anti-shake frame 23 relative to the base 212, the supporting part 201 can always support the anti-shake frame 23, so that the anti-shake frame 23 can move smoothly. Particularly, the supporting part 201 comprises at least three balls 2011, which are clamped between the top surface of the base 212 and the bottom surface of the anti-shake frame 23 and move along the X-axis direction and the Y-axis direction. In a particular example of the present invention, the base 212 comprises a lower ball track 2122, and the anti-shake frame 23 comprises an upper ball track 232, and the upper ball track 232 is located on the bottom surface of the anti-shake frame 23, and the lower ball track 2122 is located on the top surface of the base 212. The position of the upper ball track 232 corresponds to the position of the lower ball track 2122, and the extension direction of the upper ball track 232 and the extension direction of the lower ball track 2122 are perpendicular to each other to form a "cross" shape. In other examples of the present invention, the upper ball track 232 and the lower ball track 2122 may also be groove structures, and the balls 2011 move in the horizontal direction in the grooves.

Particularly, the ball 2011 is accommodated between the upper ball track 232 and the lower ball track 2122, and is allowed to move along the upper ball track 232 and the lower ball track 2122, so that the ball 2011 is movably retained between the base 212 and the anti-shake frame 23 to always support the anti-shake frame 23. Furthermore, when the anti-shake frame 23 is driven to move relative to the base 212, the balls 2011 move between the cross-shaped upper ball track 232 and the lower ball track 2122 without causing interference.

More particularly, the number of the upper ball tracks 232 and the number of the lower ball tracks 2122 are at least three, and they are respectively arranged at the corners of the base 212 and the anti-shake frame 23. In a particular example of the present invention, the number of the upper ball tracks 232 and the number of the lower ball tracks 2122 is four, which are respectively arranged at the four corners of the base 212 and the anti-shake frame 23. There are four balls 2011, which are respectively arranged between four upper ball tracks 232 and four lower ball tracks 2122, so as to provide more stable support for the anti-shake frame 23.

As shown in Figs. 1-7, the magnet part 25 is arranged at the anti-shake frame 23, and the focusing coil part 26 is arranged at the focusing carrier 22 and opposite to the magnet part 25, and the anti-shake coil part 27 is arranged at the base 212 of the fixing part 21 and opposite to the magnet part 25. The focusing coil part 26 generates a magnetic field under current excitation and interacts with the magnetic field of the magnet part 25, so that the focusing coil part 26 is driven, the focusing coil part 26 moves along the Z-axis direction, and the focusing carrier 22 moves with the focusing coil part 26, thereby realizing the focusing function, and the anti-shake coil part 27 generates a magnetic field under current excitation and interacts with the magnetic field of the magnet part 25, so that the magnet part 25 is driven, and the magnet part 25 moves in the X-axis direction and/or the Y-axis direction, and the anti-shake frame 23 moves with the magnet part 25, and the focusing carrier 22 suspended in the anti-shake frame 23 moves with the anti-shake frame 23, thereby realizing the anti-shake function. In the example of the present invention, the magnet part 25 is multi-used. The magnet part 25 is used to interact with the focusing coil part 26 in the process of realizing the focusing function, and is also used to interact with the anti-shake coil part 27 in the process of realizing the anti-shake function, so that the structural design of the driving device 20 is intensive and miniaturized.

In one example of the present invention, the magnet part 25 is fixed at the anti-shake frame 23, and the focusing coil part 26 is fixed at the side of the focusing carrier 22, and the anti-shake coil part 27 is fixed at the top surface of the base 212. The side of the magnet part 25 facing the focusing coil part 26 is exposed and is not covered by the anti-shake frame 23, so that the distance between the focusing coil part 26 and the magnet part 25 can be designed to be smaller, so as to reduce the lateral dimension (horizontal dimension) of the driving device 20, and the bottom of the magnet part 25 facing the anti-shake coil part 27 is exposed, so that the distance between the anti-shake coil part 27 and the magnet part 25 can be designed to be smaller, so as to reduce the height dimension (Z-axis direction dimension) of the driving device 20.

In a particular example, the magnet part 25 comprises a first magnet 251, a second magnet 252 and a third magnet 253. The first magnet 251, the second magnet 252 and the third magnet 253 are fixed at the anti-shake frame 23 in a counterclockwise order. The second magnet 252 and the third magnet 253 are arranged opposite to each other on both sides of the first magnet 251, and the three magnets are arranged roughly in a square shape without a side.

The focusing coil part 26 comprises a first focusing coil 261 and a second focusing coil 262, and the first focusing coil 261 and the second focusing coil 262 are respectively fixed at opposite sides of the focusing carrier 22. Particularly, the first focusing coil 261 is fixed at the focusing carrier 22 and is opposite to the second magnet 252, and the second focusing coil 262 is fixed at the focusing carrier 22 and is opposite to the third magnet 253, and the first focusing coil 261 and the second magnet 252 are arranged opposite to each other in the horizontal direction, and the second focusing coil 262 and the third magnet 253 are arranged opposite to each other in the horizontal direction. **The** first focusing coil 261 and the second focusing coil 262 can both be coil windings, and the axial direction of the winding of the first focusing coil 261 and the axial direction of the winding of the second focusing coil 262 are respectively perpendicular to the Z-axis direction (approximately perpendicular to the Z-axis (optical axis) direction), and the axial direction of the winding of the first focusing coil 261 and the axial direction of the winding of the second focusing coil 262 are parallel to each other. Particularly, the first focusing coil 261 is arranged opposite to the second magnet 252, and the second focusing coil 262 is arranged opposite to the third magnet 253, so that the first focusing coil 261 and the second focusing coil 262 respectively generate magnetic fields under current excitation and interact with the second magnet 252 and the third magnet 253, thereby driving the focusing coil part 26 and the focusing carrier 22 to move relative to the magnet part 25 and the anti-shake frame 23.

The anti-shake coil part 27 comprises a first anti-shake coil 271, a second anti-shake coil 272 and a third anti-shake coil 273. The first anti-shake coil 271 is fixed at the fixing part 21 and is opposite to the first magnet 251, and the second anti-shake coil 272 is fixed at the fixing part 21 and is opposite to the second magnet 252, and the third anti-shake coil 273 is fixed at the fixing part 21 and is opposite to the third magnet 253, that is, the first anti-shake coil 271 and the first magnet 251 are arranged opposite to each other in a height direction, and the second anti-shake coil 272 and the second magnet 252 are arranged opposite to each other in a height direction, and the third anti-shake coil 273 and the third magnet 253 are arranged opposite to each other in a height direction. Particularly, the first anti-shake coil 271, the second anti-shake coil 272 and the third anti-shake coil 273 are fixed at the top surface of the base 212 in a counterclockwise order, and the second anti-shake coil 272 and the third anti-shake coil 273 are arranged on both sides of the first anti-shake coil 271, and the three anti-shake coils are arranged roughly in a square shape without a side. The first anti-shake coil 271, the second anti-shake coil 272 and the third anti-shake coil 273 can all be coil windings, and the axial direction of the winding of the first anti-shake coil 271, the axial direction of the winding of the second anti-shake coil 272 and the axial direction of the winding of the third anti-shake coil 273 are respectively parallel to the Z-axis direction (roughly parallel to the Z-axis (optical axis) direction), and the axial direction of the winding of the first anti-shake coil 271, the axial direction of the winding of the second anti-shake coil 272 and the axial direction of the winding of the third anti-shake coil 273 are parallel to each other, and the first anti-shake coil 271, the second anti-shake coil 272 and the third anti-shake coil 273 are laid flat on the base 212. Particularly, the first anti-shake coil 271 is arranged opposite to the first magnet 251, and the second anti-shake coil 272 is arranged opposite to the second magnet 252, and the third anti-shake coil 273 is arranged opposite to the third magnet 253, so that the first anti-shake coil 271, the second anti-shake coil 272 and the third anti-shake coil 273 respectively generate magnetic fields under current excitation and interact with the first magnet 251, the second magnet 252 and the third magnet 253, thereby driving the magnet part 25, the anti-shake frame 23, the focusing coil part 26 and the focusing carrier 22 to move relative to the base 212 of the fixing part 21.

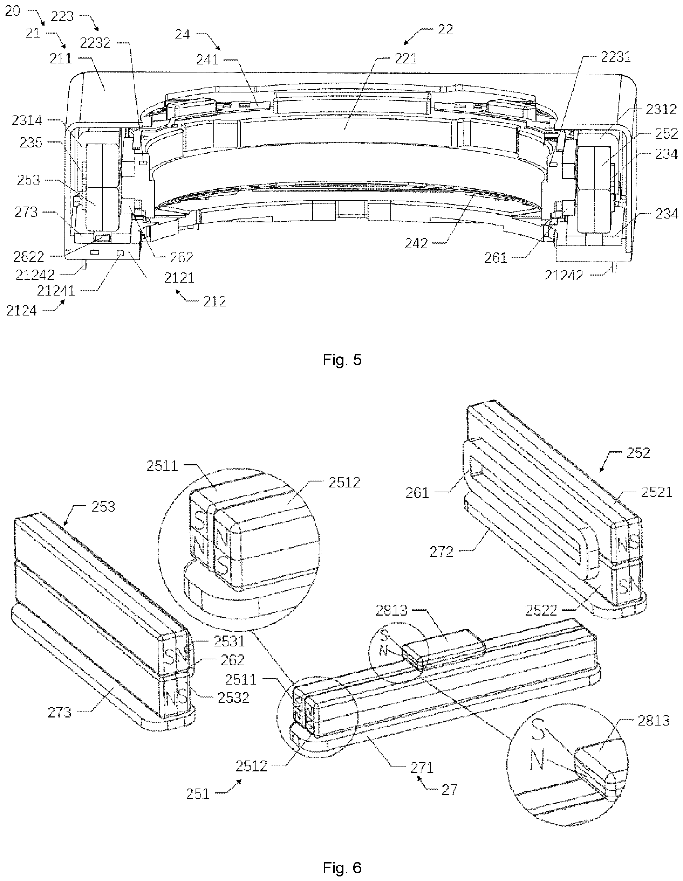

In the present invention, the second magnet 252 and the third magnet 253 of the magnet part 25 are multi-used, that is, the second magnet 252 and the third magnet 253 are used to interact with the focusing coil part 26 in the process of realizing the focusing function, and are also used to interact with the anti-shake coil part 27 in the process of realizing the anti-shake function. In one example of the present invention, the second magnet 252 and the third magnet 253 are multi-pole magnets (quadrupole magnets as shown in Fig. 6), so that the second magnet 252 and the third magnet 253 can simultaneously provide the magnetic fields required by the focusing coil part 26 and the anti-shake coil part 27. At the same time, since the first magnet 251 is not used to drive the focusing coil part 26 and the focusing carrier 22 to move, the height dimension of the first magnet 251 is smaller than that of the second magnet 252 and the third magnet 253, and the height of the top surface of the first magnet 251 is also lower than that of the top surfaces of the second magnet 252 and the third magnet 253.

In one example of the present invention, as mentioned above, the magnet part 25 comprises three magnets of a first magnet 251, a second magnet 252 and a third magnet 253. The magnet part 25 is only arranged at three sides of the driving device 20. The magnet part 25 is not arranged at one side of the driving device 20, and no magnet is arranged at the opposite side of the first magnet 251. At this time, when the driving device 20 in this example is applied to the array module, the camera module monomer of another array module can be arranged on the side of the driving device 20 where the magnet part 25 is not arranged, so that the magnet part 25 of the driving device 20 will not cause magnetic field interference to the adjacent camera module.

In another example of the present invention, the magnet part 25 may comprise only two magnets of the first magnet 251 and the second magnet 252. In this case, the focusing coil part 26 also only comprises a first focusing coil 261 arranged opposite to the second magnet 252. And, the anti-shake coil part 27 comprises: a first anti-shake coil 271 opposite to the first magnet 251, and a second anti-shake coil 272 opposite to the second magnet 252. Removing one magnet (the third magnet 253) can further reduce the size of the driving device 20, but it also reduces the driving force of the driving device 20, so that when the focusing function is realized, only one side is arranged with the first focusing coil 261 and the second magnet 252 for driving. Due to the interaction between the first focusing coil 261 and the second magnet 252, the focusing carrier 22 is prone to tilt relative to the Z axis (optical axis), which ultimately causes blurred imaging of the camera module 1.

In another example of the present invention, the magnet part 25 may further comprise a fourth magnet, so that magnets are arranged at all four sides of the driving device 20, and the magnet part 25 comprises four magnets. However, in case that magnets are arranged at all four sides of the driving device 20, when the driving device 20 is used in an array module, a coil-magnet pair cannot be set on the side of the camera module adjacent to the driving device 20 and adjacent to the fourth magnet, so as to avoid electromagnetic interference caused by the fourth magnet and the coil-magnet pair of the camera module adjacent to the fourth magnet.

Further referring to Figs. 1-3, the driving device 20 further comprises a position sensing part 28 for obtaining position information of the optical lenses 10. The position sensing part 28 can obtain the position information of the optical lenses 10 in the Z-axis direction and/or the XY plane (the plane where the X-axis and Y-axis are located) to provide it to the driving device 20, so as to adjust the position of the optical lenses 10 to form a closed-loop control, thereby speeding up the focusing speed and improving the imaging quality.

The position sensing part 28 comprises a focusing position sensing part 281, which is arranged at one side of the focusing carrier 22 in a height direction (Z-axis direction). The focusing position sensing part 281 comprises a focusing position sensing element 2811 and a focusing position sensing magnet 2813. The focusing position sensing element 2811 may be an element capable of sensing a magnetic field, such as a Hall element, a driver IC, or a TMR. The focusing position sensing element 2811 and the focusing position sensing magnet 2813 are arranged at one side of the focusing carrier 22 in a height direction, and the focusing position sensing element 2811 is arranged at one of the focusing carrier 22 and the anti-shake frame 23, and the focusing position sensing magnet 2813 is arranged at the other of the focusing carrier 22 and the anti-shake frame 23. The focusing position sensing element 2811 and the focusing position sensing magnet 2813 are arranged opposite to each other in a height direction, and the focusing position sensing element 2811 is arranged in the magnetic field of the focusing position sensing magnet 2813, so that the focusing position sensing element 2811 obtains the position information of the focusing position sensing element 2811 relative to the focusing position sensing magnet 2813 or obtains the position information of the focusing position sensing magnet 2813 relative to the focusing position sensing element 2811 by sensing the magnetic field information of the focusing position sensing magnet 2813.

In the present invention, the focusing position sensing magnet 2813 cannot be replaced by the first magnet 251, the second magnet 252 or the third magnet 253 in the magnet part 25. When the focusing position sensing element 2811 is directly facing the first magnet 251, the second magnet 252 or the third magnet 253 in a height direction, the magnetic field directions of the first magnet 251, the second magnet 252 and the third magnet 253 are difficult to meet the working requirements of the focusing position sensing element 2811. The detailed reasons are further explained below.

In one example of the present invention, the focusing position sensing element 2811 is fixed at the side extension portion 222 of the focusing carrier 22, and the focusing position sensing magnet 2813 is fixed at the top of the anti-shake frame 23, and the focusing position sensing element 2811 is located above the focusing position sensing magnet 2813, so that the focusing position sensing element 2811 and the focusing position sensing magnet 2813 are arranged at one side of the focusing carrier 22 in a height direction. And, the focusing position sensing element 2811 is arranged above the side extension portion 222, and the focusing position sensing magnet 2813 is arranged below the side extension portion 222. When the focusing carrier 22 is driven by the focusing coil part 26 and the magnet part 25 to move in a height direction (Z-axis direction), the focusing position sensing element 2811 moves in a height direction relative to the focusing position sensing magnet 2813, and the focusing position sensing element 2811 moves away from or close to the focusing position sensing magnet 2813 in the Z-axis direction. The focusing position sensing element 2811 senses the change in the magnetic field of the focusing position sensing magnet 2813, and then obtains the change in position information of the focusing position sensing element 2811 and the focusing carrier 22.

In one example of the present invention, the projection of the focusing position sensing element 2811 in a height direction at least partially falls within the focusing position sensing magnet 2813. In a particular example, the projection of the focusing position sensing element 2811 in a height direction falls within the focusing position sensing magnet 2813, so that the focusing position sensing element 2811 can obtain stronger magnetic field information.

The focusing position sensing part 281 further comprises a focusing circuit board 2812 that provides a conducting circuit for the focusing position sensing element 2811. The focusing position sensing element 2811 is electrically connected to the focusing circuit board 2812. The focusing circuit board 2812 is fixed at the side extension portion 222 of the focusing carrier 22. In a particular example of the present invention, the focusing circuit board 2812 is fixed above the side extension portion 222 (in the object side direction), and the focusing position sensing element 2811 is fixed above the focusing circuit board 2812, so that the focusing position sensing element 2811 is fixed above the side extension portion 222. And, the focusing position sensing magnet 2813 is located below the focusing position sensing element 2811 and is fixed at the top of the anti-shake frame 23, so that the distance between the focusing position sensing element 2811 and the focusing position sensing magnet 2813 can be designed to be larger, and when the focusing carrier 22 is driven by the focusing coil part 26 and the magnet part 25 to move in a height direction, the focusing position sensing element 2811 moves away from or close to the focusing position sensing magnet 2813. In another particular example of the present invention, the focusing position sensing element 2811 can be fixed below the focusing circuit board 2812, so that the focusing position sensing element 2811 is fixed below the side extension portion 222, and the focusing position sensing magnet 2813 is located below the focusing position sensing element 2811 and is fixed at the top of the anti-shake frame 23, so that the focusing position sensing element 2811 can be closer to the focusing position sensing magnet 2813, and then the position sensing magnet can provide the focusing position sensing element 2811 with stronger magnetic field information.

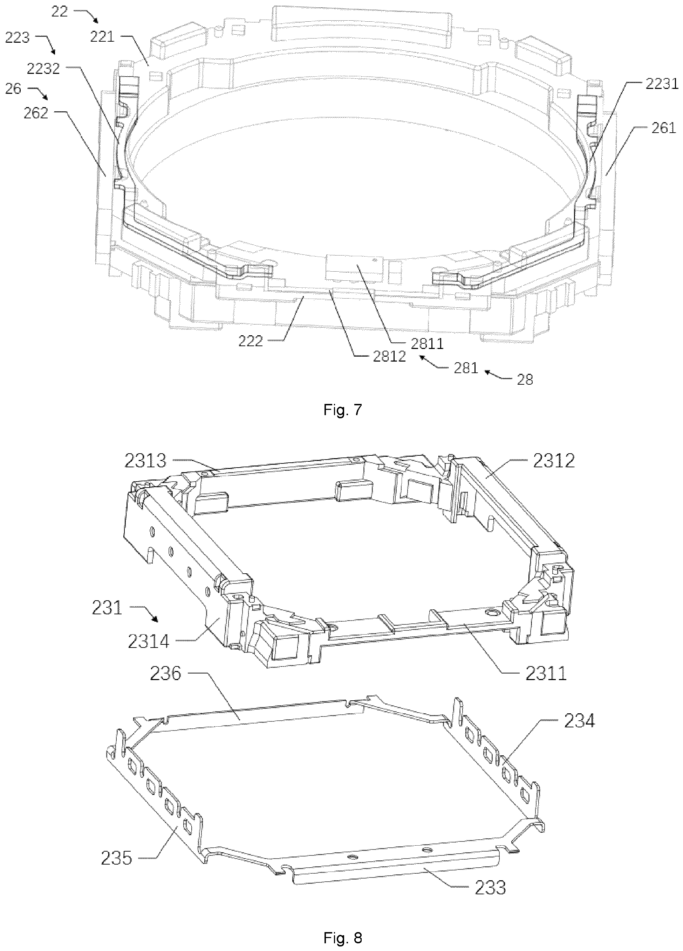

As shown in Figs. 3 and 7, the focusing carrier 22 further comprises a focusing conductive assembly 223 fixed at the carrier body 221. The focusing conductive assembly 223 comprises a first focusing conductive member 2231 and a second focusing conductive member 2232. The first focusing conductive member 2231 and the second focusing conductive member 2232 are embedded in the carrier body 221 by, for example, insert molding. The focusing conductive assembly 223 is electrically connected to the focusing circuit board 2812 and the focusing coil part 26. Particularly, the first focusing conductive member 2231 is electrically connected to the focusing circuit board 2812 and the first focusing coil 261, and the second focusing conductive member 2232 is electrically connected to the focusing circuit board 2812 and the second focusing coil 262, so that the focusing position sensing element 2811 is electrically connected to the first focusing coil 261 and the second focusing coil 262 of the focusing coil part 26, and the first focusing coil 261 and the second focusing coil 262 are connected in series through leads, and the first focusing coil 261 is electrically connected to the second focusing coil 262, so that the focusing position sensing element 2811 can adjust the current direction and/or current magnitude of the first focusing coil 261 and the second focusing coil 262 of the focusing coil part 26.

Further referring to Fig. 3, the focusing position sensing element 2811 is arranged between the first part 2411 and the fourth part 2414, and the first part 2411, the second part 2412, the third part 2413 and the fourth part 2414 of the first spring plate 241 are electrically connected to the focusing circuit board 2812 respectively, thereby providing the focusing circuit board 2812 with circuit conduction. The focusing position sensing element 2811 is electrically connected to the focusing circuit board 2812, and the first part 2411 and the second part 241, and the fourth part 2414 and the third part 2413, are respectively located at both sides of the focusing position sensing element 2811 and are electrically connected to the focusing circuit board 2812, and the first part 2411, the second part 2412, the third part 2413 and the fourth part 2414 are not connected to each other to avoid the problem of short circuit.

In one example of the present invention, the focusing position sensing part 281 and the first magnet 251 are located at the same side of the focusing carrier 22, and the focusing position sensing part 281 is arranged above the first magnet 251, so that at least one side of the driving device 20 is not arranged with a magnet. When the driving device 20 in this example is used in the array module, the camera module monomer of another array module can be arranged on the side of the driving device 20 where the magnet part 25 is not arranged, and in this way, the magnet part 25 of the driving device 20 will not cause magnetic field interference to the adjacent camera module.

In one example of the present invention, the focusing position sensing magnet 2813 is arranged above the first magnet 251. Since the height of the top surface of the first magnet 251 is lower than the top surfaces of the second magnet 252 and the third magnet 253, there is a larger space above the first magnet 251 for setting the focusing position sensing magnet 2813, and the height of the driving device 20 can be reduced.

Since the distance between the focusing position sensing magnet 2813 and the first magnet 251 is set relatively small, in order to ensure that both of the focusing position sensing magnet 2813 and the first magnet 251 can be well fixed at the anti-shake frame 23, the focusing position sensing magnet 2813 is implemented as a two-pole magnet, while the first magnet 251 is implemented as a multi-pole magnet, for example, the first magnet 251 can be a four-pole magnet. Particularly, referring to Fig. 6, as viewed from the direction in the figure, the focusing position sensing magnet 2813 has an S pole (South Pole) located at the top and an N pole (North Pole) located at the bottom, and the magnetic pole direction (N-S) of the focusing position sensing magnet 2813 is upward, and the magnetic pole direction of the focusing position sensing magnet 2813 is parallel to a height direction, so that the focusing position sensing element 2811 can obtain effective magnetic field information. The first magnet 251 comprises a first magnetic force part 2511 and a second magnetic force part 2512, and the first magnetic force part 2511 and the second magnetic force part 2512 are stacked in a horizontal direction (a direction perpendicular to the optical axis), and the second magnetic force part 2512 is located at the side of the first magnetic force part 2511 away from the optical axis, and the second magnetic force part 2512 is located at the side of the first magnetic force part 2511 away from the focusing carrier 22, and the first magnetic force part 2511 is located between the focusing carrier 22 and the second magnetic force part 2512. As viewed from the direction in the figure, the top of the first magnetic force part 2511 is the S pole, and the bottom of the first magnetic force part 2511 is the N pole, and the magnetic pole direction of the first magnetic force part 2511 is upward, and the top of the second magnetic force part 2512 is the N pole, and the bottom of the second magnetic force part 2512 is the S pole, and the magnetic pole direction of the second magnetic force part 2512 is downward, so that the first magnet 251 has an N pole and an S pole at the side facing the first anti-shake coil 271. It should be noted that, in the present invention, the magnetic pole direction (N-S) refers to the direction from the N pole to the S pole.

In one example of the present invention, the magnetic pole direction of the focusing position sensing magnet 2813 is the same as the magnetic pole direction of the first magnetic force part 2511 of the first magnet 251, so that the focusing position sensing magnet 2813 can be arranged at an inner side closer to the focusing carrier 22, and the focusing position sensing element 2811 corresponding to the focusing position sensing magnet 2813 is also arranged at an inner side of the focusing carrier 22 closer to the optical axis, so that the size of the driving device 20 can be designed to be smaller.

Further referring to Fig. 6, in one example of the present invention, the second magnet 252 comprises a third magnetic force part 2521 and a fourth magnetic force part 2522, and the third magnetic force part 2521 and the fourth magnetic force part 2522 are stacked in a direction parallel to the optical axis, and the third magnetic force part 2521 is located at the side of the fourth magnetic force part 2522 away from the second anti-shake coil 272, and the fourth magnetic force part 2522 is located between the third magnetic force part 2521 and the second anti-shake coil 272. Viewing in the direction of the figure, the left side of the third magnetic force part 2521 (the side close to the first focusing coil 261) is the N pole, and the right side of the third magnetic force part 2521 (the side away from the first focusing coil 261) is the S pole, and the left side of the fourth magnetic force part 2522 (the side close to the first focusing coil 261) is the S pole, and the right side of the fourth magnetic force part 2522 (the side away from the first focusing coil 261) is the N pole. In this way, the second magnet 252 has an N pole and an S pole at the side facing the second anti-shake coil 272, and the second magnet 252 also has an N pole and an S pole at the side facing the first focusing coil 261.

**The** third magnet 253 comprises a fifth magnetic force part 2531 and a sixth magnetic force part 2532, and the fifth magnetic force part 2531 and the sixth magnetic force part 2532 are stacked in a direction parallel to the optical axis. Particularly, the fifth magnetic force part 2531 is located at the side of the sixth magnetic force part 2532 away from the third anti-shake coil 273, and the sixth magnetic force part 2532 is located between the fifth magnetic force part 2531 and the third anti-shake coil 273. Viewing in the direction in the figure, the left side of the fifth magnetic force part 2531 (the side away from the second focusing coil 262) is S pole, and the right side of the fifth magnetic force part 2531 (the side close to the first focusing coil 261) is the N pole, and the left side of the sixth magnetic force part 2532 (the side away from the first focusing coil 261) is the N pole, and the right side of the sixth magnetic force part 2532 (the side close to the first focusing coil 261) is the S pole. In this way, the second magnet 252 has an N pole and an S pole at the side facing the second anti-shake coil 272, and the second magnet 252 also has an N pole and an S pole at the side facing the first focusing coil 261.

In another example of the present invention, the magnetic pole direction of the focusing position sensing magnet 2813 may also be opposite to the direction shown in Fig. 6, and the magnetic pole direction of the focusing position sensing magnet 2813 may be downward, that is, the magnetic pole above the focusing position sensing magnet 2813 is the N pole, and the magnetic pole below the focusing position sensing magnet 2813 is the S pole. Correspondingly, the top of the first magnetic force part 2511 of the first magnet 251 is the N pole, and the bottom of the first magnetic force part 2511 of the first magnet 251 is the S pole, and the top of the second magnetic force part 2512 of the first magnet 251 is the S pole, and the bottom of the second magnetic force part 2512 of the first magnet 251 is the N pole. The magnetic pole direction of the first magnetic force part 2511 is downward, and the magnetic pole direction of the second magnetic force part 2512 is upward. In other words, the magnetic pole direction of the focusing position sensing magnet 2813 is consistent with the magnetic pole direction of the first magnetic force part 2511 located at the inner side of the first magnet 251, so that the focusing position sensing magnet 2813 can be provided at an inner side closer to the focusing carrier 22. Similarly, the directions of the magnetic poles in the second magnet 252 and the third magnet 253 can also be provided in opposite directions, which can be designed according to practical needs.

In one example of the present invention, as shown in Figs. 1, 5 and 8, the anti-shake frame 23 comprises a frame body 231 and a first magnetic conductive member 233 fixed at the frame body 231. The first magnetic conductive member 233 is arranged between the focusing position sensing magnet 2813 and the first magnet 251, and the first magnetic conductive member 233 is composed of a material with magnetic conductive properties, such as stainless steel (SUS430). By providing a first magnetic conductive member 233, the influence of the magnetic field of the first magnet 251 on the focusing position sensing element 2811 is reduced. In a particular example of the present invention, the first magnetic conductive member 233 is embedded in the frame body 231 through a process such as insert molding, and the focusing position sensing magnet 2813 is arranged above the first magnetic conductive member 233, and the first magnet 251 is arranged below the first magnetic conductive member 233. Particularly, the focusing position sensing magnet 2813 and the first magnet 251 can also be fixed by the first magnetic conductive member 233. The focusing position sensing magnet 2813 is fixed above the first magnetic conductive member 233 by magnetic attraction, and the first magnet 251 is fixed below the first magnetic conductive member 233 by magnetic attraction. The focusing position sensing magnet 2813 may be closely attached to the upper surface of the first magnetic conductive member 233, and the first magnet 251 may be closely attached to the lower surface of the first magnetic conductive member 233.

Further referring to Figs. 5 and 8, the anti-shake frame 23 further comprises a second magnetic conductive member 234 and a third magnetic conductive member 235 fixed at the frame body 231. The second magnetic conductive member 234 and the third magnetic conductive member 235 can be embedded in the frame body 231 by a process such as insert molding. The second magnetic conductive member 234 is arranged at the side of the second magnet 252 away from the first focusing coil 261, so as to enhance the magnetic field strength at the side of the second magnet 252 facing the first focusing coil 261. The third magnetic conductive member 235 is arranged at the side of the third magnet 253 away from the second focusing coil 262, so as to increase the magnetic field strength at the side of the third magnet 253 facing the second focusing coil 262. Particularly, the second magnet 252 can also be fixed at the second magnetic conductive member 234 through the magnetic attraction between the second magnet 252 and the second magnetic conductive member 234, or the second magnet 252 can be more firmly adsorbed at the frame body 231 through the magnetic attraction between the second magnet 252 and the second magnetic conductive member 234, and the third magnet 253 can also be fixed at the third magnetic conductive member 235 or be more firmly adsorbed on the frame body 231 through the magnetic action between the third magnet 253 and the third magnetic conductive member 235.

The second magnetic conductive member 234 and the third magnetic conductive member 235 are arranged at both sides of the first magnetic conductive member 233. The second magnetic conductive member 234 and the third magnetic conductive member 235 can be respectively connected to the two ends of the first magnetic conductive member 233. The second magnetic conductive member 234 and the third magnetic conductive member 235 extend integrally from the two ends of the first magnetic conductive member 233, so that the first magnetic conductive member 233, the second magnetic conductive member 234 and the third magnetic conductive member 235 can be fixed in the frame body 231 as one component, thereby simplifying the manufacturing process. In one example of the present invention, the anti-shake frame 23 further comprises a connecting member 236 connecting the second magnetic conductive member 234 and the third magnetic conductive member 235, and the connecting member 236 is fixed at the opposite side of the first magnetic conductive member 233. By providing a connecting member 236, the first magnetic conductive member 233, the second magnetic conductive member 234, the third magnetic conductive member 235 and the connecting member 236 together form an annular structure, so that the annular structure is embedded in the frame body 231 through a process such as insert molding, thereby enhancing the structural strength of the frame body 231, particularly, the shape of the annular structure is similar to a rectangle.

In one example of the present invention, the frame body 231 comprises a first side portion 2311, a second side portion 2312, a third side portion 2313 and a fourth side portion 2314 which are arranged in sequence in a counterclockwise direction, and the second side portion 2312 and the fourth side portion 2314 are arranged opposite to each other at both sides of the first side portion 2311, and the third side portion 2313 is at the opposite side of the first side portion 2311, and the first side portion 2311, the second side portion 2312, the third side portion 2313 and the fourth side portion 2314 are integrally connected. Particularly, the top surface of the first side portion 2311 is lower than the top surfaces of the second side portion 2312 and the fourth side portion 2314, and the focusing position sensing part 281 comprises a focusing position sensing element 2811 and a focusing position sensing magnet 2813 arranged opposite to each other in a height direction, and the focusing position sensing magnet 2813 is arranged at the first side portion 2311.

Particularly, as shown in Figs. 1-3, 5 and 8, the first magnet 251 is fixed at the first side portion 2311, and the second magnet 252 is fixed at the second side portion 2312, and the third magnet 253 is fixed at the fourth side portion 2314, and the height of the top surface of the first magnet 251 is lower than the height of the top surfaces of the second magnet 252 and the third magnet 253, and the focusing position sensing magnet 2813 is arranged above the first magnet 251. Since the first side portion 2311 has a lower top surface, there is a certain space above the first side portion 2311 suitable for arranging the focusing position sensing magnet 2813 and the focusing position sensing element 2811, without causing the height dimension of the driving device 20 to be designed to be larger.

The first magnetic conductive member 233 is fixed at the first side portion 2311 and thus fixed at the frame body 231, and the second magnetic conductive member 234 is fixed at the second side portion 2312 and thus fixed at the frame body 231, and the third magnetic conductive member 235 is fixed at the fourth side portion 2314 and thus fixed at the frame body 231, and the connecting member 236 is fixed at the third side portion 2313 and thus fixed at the frame body 231.

As shown in Figs. 1-2 and 11, in one example of the present invention, the position sensing part 28 further comprises an anti-shake position sensing part 282, and the anti-shake position sensing part 282 is arranged opposite to the magnet part 25 in a height direction, and the anti-shake position sensing part 282 is arranged on the base 212. When the anti-shake frame 23 moves, the relative positions of the anti-shake position sensing part 282 and the magnet part 25 are changed, and according to the strength of the magnetic field of the magnet part 25 sensed by the anti-shake position sensing part 282, the position of the anti-shake frame 23 can be determined, and then the current of the focusing coil part 26 and the anti-shake coil part 27 can be adjusted to move the anti-shake frame 23 to a required position. In the present invention, the anti-shake position sensing part 282 may be a Hall element, a driver IC, a TMR or other element that can sense a magnetic field.

Particularly, in one example of the present invention, the anti-shake position sensing part 282 comprises a first anti-shake position sensing element 2821 and a second anti-shake position sensing element 2822, and the first anti-shake position sensing element 2821 is arranged opposite to the first magnet 251 in a height direction, and the second anti-shake position sensing element 2822 is arranged opposite to the second magnet 252 or the third magnet 253 in a height direction, and the position information of the anti-shake frame 23 moving along the X-axis direction and the Y-axis direction is sensed by the first anti-shake position sensing element 2821 and the second position sensing element. For example, in a particular example of the present invention, the first anti-shake position sensing element 2821 is arranged in the first anti-shake coil 271 to be arranged opposite to the first magnet 251 in a height direction, and the second anti-shake position sensing element 2822 is arranged in the third anti-shake coil 273 to be arranged opposite to the third magnet 253 in a height direction.

More particularly, in one example of the present invention, a groove is arranged at the base 212, and the first anti-shake position sensing element 2821 and the second anti-shake position sensing element 2822 are arranged in the groove of the base 212 to avoid the first anti-shake position sensing element 2821 and the second anti-shake position sensing element 2822 protruding from the top surface of the base 212, thereby increasing the height of the driving device 20.

In one example of the present invention, the base 212 comprises a base body 2121, a magnetic attraction assembly 2123 and a base conductive assembly 2124, and the magnetic attraction assembly 2123 and the base conductive assembly 2124 are arranged at the base body 2121, and the magnetic attraction assembly 2123 and the base conductive assembly 2124 have a certain height difference on the base body 2121, thereby avoiding interference between the two. For example, in a particular example of the present invention, the magnetic attraction assembly 2123 is arranged higher than the base conductive assembly 2124, which not only prevents interference between the magnetic attraction assembly 2123 and the base conductive assembly 2124, but also makes the distance between the magnetic attraction assembly 2123 and the magnet part 25 closer, thereby achieving a better magnetic attraction effect. In another particular example of the present invention, the magnetic attraction assembly 2123 can be arranged lower than the base conductive assembly 2124, and the present invention does not impose any limitation on this.

More particularly, in one example of the present invention, the magnetic attraction assembly 2123 is embedded in the base body 2121 through an insert molding process, and the magnetic attraction assembly 2123 is only arranged opposite to the second magnet 252 and the third magnet 253 of the magnet part 25 in a height direction, so as to generate a magnetic attraction force in a height direction (Z-axis direction) between the magnetic attraction assembly 2123 and the second magnet 252 and the third magnet 253. On one hand, the supporting part 201 is clamped between the base body 2121 and the anti-shake frame 23 by action of the magnetic attraction force; and on the other hand, after movement of the anti-shake frame 23, the anti-shake frame 23 is maintained in a position by action of the magnetic attraction force, and the position can be the initial position before the anti-shake frame 23 is driven. In another example of the present invention, the magnetic attraction assembly 2123 may also be fixed at the base body 2121 by bonding or welding, etc., and the present invention does not impose any limitation on this.

Of course, it can also be said that, the side of the base body 2121 opposite to the second magnet 252 and the third magnet 253 is arranged with the magnetic attraction assembly 2123, and the side of the base body 2121 opposite to the first magnet 251 is not arranged with the magnetic attraction assembly 2123.

Furthermore, the magnetic attraction assembly 2123 may not contain magnetism. For example, the magnetic attraction assembly 2123 may be made of ferrite, or the magnetic attraction assembly 2123 itself may be a permanent magnet. When the magnetic attraction assembly 2123 is located in the magnetic field of the second magnet 252 and the third magnet 253, it is affected by the magnetic force of the second magnet 252 and the third magnet 253. The magnetic attraction assembly 2123 forms mutual attraction with the second magnet 252 and the third magnet 253 respectively to limit the positions of the second magnet 252 and the third magnet 253 relative to the magnetic attraction assembly 2123 (base body 2121), so that the second magnet 252 and the third magnet 253 will basically not separate from the driving device 20 when they are not affected by the force of the focusing coil part 26.

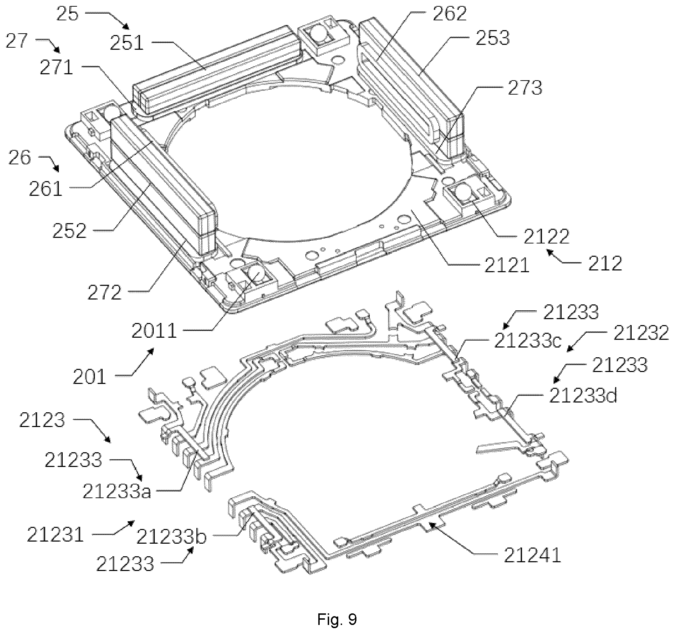

As shown in Figs. 9-10, in one example of the present invention, the magnetic attraction assembly 2123 comprises a first magnetic attraction part 21231 and a second magnetic attraction part 21232, and the first magnetic attraction part 21231 and the second magnet 252 are arranged opposite to each other in a height direction, and the second magnetic attraction part 21232 and the third magnet 253 are arranged opposite to each other in a height direction, and the first magnetic attraction part 21231 and the second magnetic attraction part 21232 are arranged on opposite sides of the base body 2121, that is, the first magnetic attraction part 21231 and the second magnetic attraction part 21232 are arranged opposite to each other with respect to the X-axis direction or the Y-axis direction. This arrangement enables the first magnetic attraction force F1 generated by the interaction between the first magnetic attraction part 21231 and the second magnet 252, and the second magnetic attraction force F2 generated by the interaction between the second magnetic attraction part 21232 and the third magnet 253 to be symmetrical with each other. In other words, the first magnetic attraction force F1 and the second magnetic attraction force F2 are symmetrical forces, and the anti-shake frame 23 maintains balance under the action of the symmetrical magnetic attraction forces (the first magnetic attraction force F1 and the second magnetic attraction force F2) on opposite sides, thus avoiding tilting. Further, in a particular example of the present invention, the first magnetic attraction part 21231 and the second magnetic attraction part 21232 are symmetrically arranged relative to the X-axis direction or the Y-axis direction.

Further, as mentioned above, a first magnetic attraction force in a height direction is generated between the first magnetic attraction part 21231 of the magnetic attraction assembly 2123 and the second magnet 252, and a second magnetic attraction force in a height direction is generated between the second magnetic attraction part 21232 of the magnetic attraction assembly 2123 and the third magnet 253. Under the action of the first magnetic attraction force and the second magnetic attraction force, the ball 2011 always remains clamped between the base body 2121 and the anti-shake frame 23, and the lower ball track 2122 is located at the top surface of the base body 2121. In other words, the ball 2011 always supports the anti-shake frame 23 through the action of the magnetic attraction force.

Particularly, the magnetic attraction assembly 2123 is only arranged opposite to the second magnet 252 and the third magnet 253 of the magnet part 25 in a height direction, and is not arranged opposite to the first magnet 251 of the magnet part 25 in a height direction. That is to say, the magnetic attraction force is only generated between the first magnetic attraction part 21231 and the second magnet 252 and between the second magnetic attraction part 21232 and the third magnet 253, that is, the side of the base body 2121 opposite to the second magnet 252 and the third magnet 253 is arranged with the magnetic attraction assembly 2123, and the side of the base body 2121 opposite to the first magnet 251 is not arranged with the magnetic attraction assembly 2123. This is because in the present invention, the first magnet 251, the second magnet 252 and the third magnet 253 are respectively arranged at the three sides of the anti-shake frame 23. When the first magnet 251, the second magnet 252 and the third magnet 253 generate magnetic attraction with the magnetic attraction assembly 2123, only the three sides of the anti-shake frame 23 are affected by the magnetic attraction, which causes the anti-shake frame 23 to tilt under the action of the asymmetric magnetic attraction. To avoid this situation, only symmetrical magnetic attraction forces are generated between the second magnet 252, the third magnet 253 and the magnetic attraction assembly 2123, so that the anti-shake frame 23 can remain stable under the action of the symmetrical magnetic attraction forces.

More particularly, the first magnetic attraction part 21231 and the second magnetic attraction part 21232 are only arranged at opposite sides of the base body 2121, and do not extend to the corners of the base body 2121, that is, the first magnetic attraction part 21231 and the second magnetic attraction part 21232 will only be attracted by the magnetic force of the second magnet 252 and the third magnet 253, but not by the magnetic force of the first magnet 251, thereby generating an asymmetric magnetic attraction force. Furthermore, the structural arrangement in which the first magnetic attraction part 21231 and the second magnetic attraction part 21232 do not extend to the corners of the base body 2121 can also provide a certain placement position for the supporting part 201, making the structure of the driving device 20 more compact.

Furthermore, in one example of the present invention, the magnetic attraction assembly 2123 comprises an even number of magnetic attraction members 21233, and the even number of magnetic attraction members 21233 are symmetrically arranged at two opposite sides of the base body 2121 to generate symmetrical magnetic attraction forces. Furthermore, the even number of magnetic attraction members 21233 have the same shape, thereby providing a uniform and stable magnetic attraction force, so that the anti-shake frame 23 is stably adsorbed to the base 212. In a particular example of the present invention, the number of magnetic attraction members 21233 is four, and the first magnetic attraction part 21231 comprises two magnetic attraction members 21233, and the second magnetic attraction part 21232 comprises two magnetic attraction members 21233, and the four magnetic attraction members 21233 are symmetrically arranged below the second magnet and the third magnet. In another particular example of the present invention, the number of magnetic attraction members 21233 is two, and the first magnetic attraction part 21231 comprises one magnetic attraction member 21233, and the second magnetic attraction part 21232 comprises one magnetic attraction member 21233, and the two magnetic attraction members 21233 are symmetrically arranged below the second magnet and the third magnet.

In one example of the present invention, the magnetic attraction assembly 2123 is a split structure, which comprises a first magnetic attraction member 21233a, a second magnetic attraction member 21233b, a third magnetic attraction member 21233c and a fourth magnetic attraction member 21233d. Particularly, the first magnetic attraction part 21231 comprises a first magnetic attraction member 21233a and a second magnetic attraction member 21233b, which are symmetrically arranged below the second magnet 252, and the second magnetic attraction part 21232 comprises a third magnetic attraction member 21233c and a fourth magnetic attraction member 21233d, which are symmetrically arranged below the third magnet 253. Particularly, the first magnetic attraction member 21233a and the second magnetic attraction member 21233b extend along the length direction of the second magnet 252, and the first magnetic attraction member 21233a and the second magnetic attraction member 21233b are arranged at intervals in the length direction of the second magnet 252. The first magnetic attraction member 21233a and the second magnetic attraction member 21233b have a certain interval in the extension direction so that the first magnetic attraction member 21233a and the second magnetic attraction member 21233b do not contact each other, so as to avoid the first magnetic attraction member 21233a and the second magnetic attraction member 21233b being connected as a whole, causing the magnetic attraction force between them and the second magnet 252 to be too large, thereby affecting the driving effect of the driving device 20. The third magnetic attraction member 21233c and the fourth magnetic attraction member 21233d extend along the length direction of the third magnet 253, and the third magnetic attraction member 21233c and the fourth magnetic attraction member 21233d are arranged at intervals in the length direction of the third magnet 253, and the third magnetic attraction member 21233c and the fourth magnetic attraction member 21233d have a certain interval in the extension direction so that the third magnetic attraction member 21233c and the fourth magnetic attraction member 21233d do not contact each other. If the third magnetic attraction member 21233c and the fourth magnetic attraction member 21233d are connected as a whole, excessive magnetic attraction force will be generated between them and the third magnet 253, thereby affecting the driving effect of the driving device 20.

Furthermore, the first magnetic attraction member 21233a and the second magnetic attraction member 21233b are separately arranged, and along the length direction of the second magnet 252, the first magnetic attraction member 21233a and the second magnetic attraction member 21233b are respectively located at the two ends of the second magnet 252. **The** third magnetic attraction member 21233c and the fourth magnetic attraction member 21233d are separately arranged, and along the length direction of the third magnet 252, the third magnetic attraction member 21233c and the fourth magnetic attraction member 21233d are respectively located at the two ends of the third magnet 253. Particularly, the length direction of the second magnet 252 and the third magnet 253 is the X-axis direction, and the width direction of the second magnet 252 and the third magnet 253 is the Y-axis direction. It should be understood that, below the second magnet 252, the first magnetic attraction member 21233a and the second magnetic attraction member 21233b are symmetrically arranged along the Y-axis direction. And below the third magnet 253, the third magnetic attraction member 21233c and the fourth magnetic attraction member 21233d are symmetrically arranged along the Y-axis direction. And, the first magnetic attraction member 21233a and the third magnetic attraction member 21233c are arranged opposite to each other along the X-axis direction, and the second magnetic attraction member 21233b and the fourth magnetic attraction member 21233d are arranged opposite to each other along the X-axis direction. This arrangement enables a magnetic attraction force to be generated along the X-axis direction and/or along the Y-axis direction between the second magnet 252 and the third magnet 253 and the four magnetic attraction members 21233, or in other words, the magnetic attraction forces of the component forces along the X-axis direction and/or along the Y-axis direction can be generated between the second magnet 252 and the third magnet 253 and the four magnetic attraction members 21233.

When the anti-shake coil part 27 is not excited by current, the split magnetic attraction assembly 2123 can generate magnetic attraction forces along the X-axis direction and the Y-axis direction (or component forces along the X-axis direction and the Y-axis direction) between the first magnetic attraction member 21233a, the second magnetic attraction member 21233b and the second magnet 252, and between the third magnetic attraction member 21233c, the fourth magnetic attraction member 21233d and the third magnet 253. Under the action of the magnetic attraction force, the anti-shake frame 23 can be maintained at the center position of the driving device 20 (i.e., the position roughly coinciding with the optical axis). In other words, the anti-shake frame 23 can be reset to the center position of the driving device 20 under the action of the magnetic attraction force.

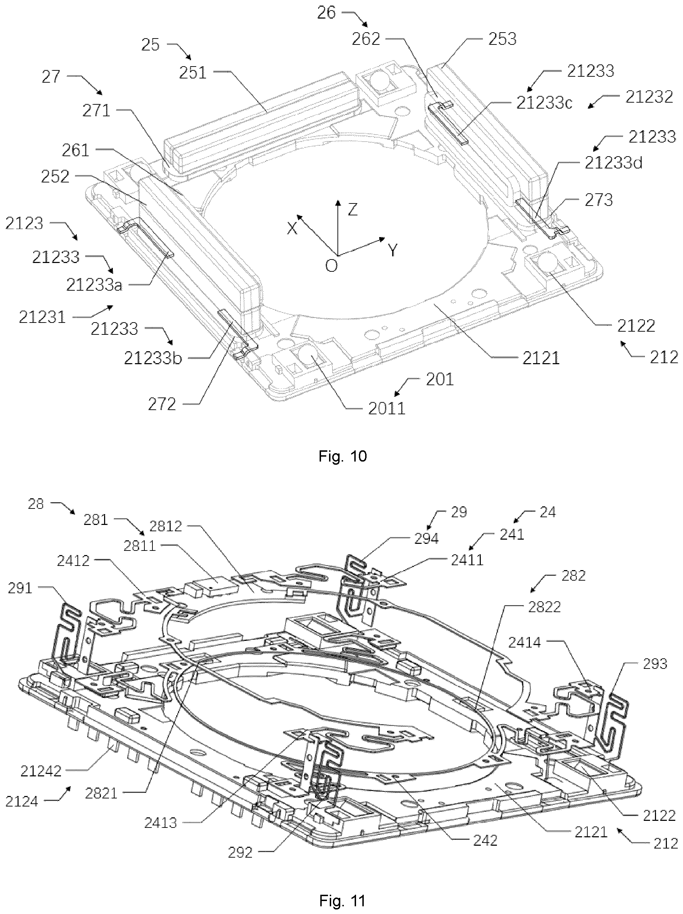

In one example of the present invention, the upper surface of the magnetic attraction member 21233 is wrapped by the base body 2121, as shown in Fig. 10. In other examples of the present invention, the upper surface of the magnetic attraction member 21233 may also be exposed and not wrapped by the base body 2121, and the present invention is not limited to this.

Further referring to Fig. 9, in one example of the present invention, the base conductive assembly 2124 is embedded in the base body 2121 by, for example, insert molding, to provide a base 212 with a conductive function, so that the anti-shake coil part 27 and the anti-shake position sensing part 282 can be electrically connected to the chip circuit board 32 of the photosensitive assembly 30 through the base conductive assembly 2124 of the base 212. Furthermore, the base conductive assembly 2124 is embedded in the base body 2121 by insert molding. The base 212 is suitable for providing two flat mounting surfaces for mounting and fixing the anti-shake coil part 27, the anti-shake position sensing part 282 and the photosensitive assembly 30, which can not only reduce the number of components of the driving device 20 and the assembly complexity of the driving device 20, but also protect the base conductive assembly 2124.

Particularly, in one example of the present invention, the magnetic attraction assembly 2123 and the base conductive assembly 2124 are composed of different materials, and the magnetic attraction assembly 2123 is composed of magnetic conductive material so that a magnetic attraction force can be generated between the magnetic attraction assembly 2123 and the second magnet 252 and the third magnet 253 of the magnet part 25, and the base conductive assembly 2124 is composed of non-magnetic conductive material for signal conduction, thereby achieving the advantages of independent function of the driving device 20 and a simplified assembly. In other words, a magnetic attraction force should not be generated the base conductive assembly 2124 and the magnet part 25, thereby avoiding to be magnetically attracted to each other.

More particularly, the base conductive assembly 2124 comprises a conductive portion 21241 and multiple pins 21242, and the conductive portion 21241 and the plurality of pins 21242 are integrally formed from a conductive material. Particularly, the conductive portion 21241 is embedded in the base body 2121 for example by insert molding, and multiple pins 21242 are exposed and not covered by the base body 2121. The multiple pins 21242 are electrically connected to the chip circuit board 32 of the photosensitive assembly 30, thereby electrically conducting the anti-shake coil part 27, the anti-shake position sensing part 282 and the chip circuit board 32. It should be understood that, the number of conductive portions 21241 and the number of multiple pins 21242 are related to the number of circuits required by the anti-shake coil part 27 and the anti-shake position sensing part 282, and the present invention does not impose any restrictions on this.

As shown in Figs. 2-3 and 11, in one example of the present invention, the driving device 20 further comprises a side connection part 29, and the side connection part 29 is arranged at the side walls of the anti-shake frame 23 and the base 212. The side connection part 29 has a foliated structure as a whole, with one end of the side connection part 29 connected to the side wall of the anti-shake frame 23, and the other end of the side connection part 29 connected to the side wall of the base 212 to support and limit the anti-shake frame 23, which not only helps to improve the structural stability of the driving device 20, but also enables the anti-shake frame 23 to move and reset within a certain stroke range.

Particularly, in one example of the present invention, the side connection part 29 comprises a first connection end fixed at the anti-shake frame 23, a second connection end fixed at the base 212, and an elastic deformation portion integrally connecting the first connection end and the second connection end. Particularly, the elastic deformation portion comprises a plurality of interconnected bending segments extending along the X direction and a plurality of interconnected bending segments extending along the Y direction, and the plurality of interconnected bending segments extending along the X direction are interconnected with the plurality of interconnected bending segments extending along the Y direction. The elastic deformation portion is deformed after being stretched in the X and Y directions to generate corresponding restoring forces in the X and Y directions, so that the anti-shake frame 23 returns to its original position (the original position is the position of the anti-shake frame 23 before moving) under the action of the side connection part 29.

More particularly, as shown in Fig. 11, in one example of the present invention, the side connection part 29 comprises a first side spring plate 291, a second side spring plate 292, a third side spring plate 293 and a fourth side spring plate 294. Particularly, the first side spring plate 291 and the second side spring plate 292 are arranged at one side of the driving device 20, and the third side spring plate 293 and the fourth side spring plate 294 are arranged at the other side of the driving device 20 opposite to the side, so that the anti-shake frame 23 is subjected to symmetrical restoring force after moving. Of course, it can also be said that, the first side spring plate 291, the second side spring plate 292, the third side spring plate 293 and the fourth side spring plate 294 are symmetrically arranged with respect to the X-axis direction or the Y-axis direction.

Further, in one example of the present invention, a first connection end of the first side spring plate 291 is electrically connected to the first part 2411 of the first spring plate 241, and a second connection end of the first side spring plate 291 is electrically connected to the base conductive assembly 2124 of the base 212, and a first connection end of the second side spring plate 292 is electrically connected to the second part 2412 of the first spring plate 241, and a second connection end of the second side spring plate 292 is electrically connected to the base conductive assembly 2124 of the base 212, and a first connection end of the third side spring plate 293 is electrically connected to the third part 2413 of the first spring plate 241, and a second connection end of the third side spring plate 293 is electrically connected to the base conductive assembly 2124 of the base 212, and a first connection end of the fourth side spring plate 294 is electrically connected to the fourth part 2414 of the first spring plate 241, and a second connection end of the fourth side spring plate 294 is electrically connected to the base conductive assembly 2124 of the base 212, so as to realize circuit conduction of the driving device 20. That is to say, the first spring plate 241 is electrically connected to the focusing circuit board 2812 and the side connection part 29, and the side connection part 29 is electrically connected to the first spring plate 241 and the base conductive assembly 2124, thereby the circuit conduction of the driving device 20 is achieved through the first spring plate 241 and the side connection part 29.

It is understandable that, the side connection part 29 can provide a more symmetrical restoring force for the anti-shake frame 23, and can also realize the electrical connection of the driving device 20. Furthermore, the side connection part 29 is arranged at the side wall of the driving device 20, and the first spring plate 241 is arranged at the top of the driving device 20, so as to avoid interference or short circuit between the two, thereby avoiding affecting the driving effect.

### Array Module

The array module is a multi-camera module comprising two or more camera module monomers. For example, the array module may comprise two camera module monomers and can be called a dual-camera module, or the array module may comprise three camera module monomers and can be called a triple-camera module. In the present invention, the array module may further comprise four, five or more camera module monomers, but the present invention is not limited thereto.

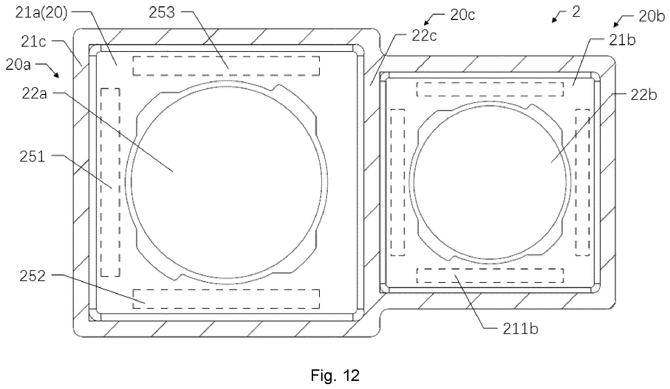

Fig. 12 shows a top view schematic diagram of the array module 2 of the present invention, the array module 2 comprises a first camera module 20a and a second camera module 20b, and the first camera module 20a comprises a first photosensitive assembly, a first optical lenses 22a held on the photosensitive path of the first photosensitive assembly, and a first driving device 21a for driving the first optical lenses 22a to move to achieve optical performance adjustment, and the second camera module 20b comprises a second photosensitive assembly, a second optical lenses 22b held on the photosensitive path of the second photosensitive assembly, and a second driving device 21b for driving the second optical lenses 22b to move to achieve optical performance adjustment. Particularly, the first camera module 20a adopts the driving device 20 mentioned above in this application as the first driving device 21a. In other words, the first driving device 21a is implemented as the driving device 20 mentioned above in this application. The first camera module 20a is the camera module 1 equipped with the driving device 20 mentioned above in this application.

In one example of the present invention, the array module 2 further comprises a module bracket 20c, wherein the first camera module 20a and the second camera module 20b are accommodated in the module bracket 20c and fixed at the module bracket 20c. In a particular example of the present invention, the module bracket 20c comprises a bracket frame portion 21c and a bracket connecting portion 22c, and the bracket connecting portion 22c is integrally connected to the bracket frame portion 21c and divides the bracket frame portion 21c into two module accommodating areas, and the first camera module 20a and the second camera module 20b are respectively installed in the two module accommodating areas of the module bracket 20c.

As shown in Fig. 12, the first camera module 20a is adjacent to the second camera module 20b, and the magnet part 25 is not provided at the adjacent side of the first camera module 20a which is adjacent to the second camera module 20b. In other words, the first magnet 251 of the magnet part 25 is provided at the opposite side of the adjacent side of the driving device 20 (first driving device 21a), and the second magnet 252 and the third magnet 253 are respectively provided at the adjacent sides of the adjacent side of the driving device 20.

The second driving device 21b comprises at least one driving magnet 211b and a driving coil arranged opposite to the at least one driving magnet 211b, and the driving magnet 211b cooperates with the driving coil to drive the second optical lenses 22b to move. In one example of the present invention, at least one driving magnet 211b comprises a driving magnet 211b arranged at the adjacent side of the second driving device 21b adjacent to the driving device 20, and since the magnet part 25 is not arranged at the adjacent side of the driving device 20, the electromagnetic interference generated by the magnet part 25 of the driving device 20 to the driving magnet 211b and the driving coil of the second driving device 21b is low or even without electromagnetic interference, and the electromagnetic interference generated by the driving magnet 211b of the second driving device 21b to the magnet part 25, the focusing coil part 26 and the anti-shake coil part 27 of the driving device 20 is low or even without electromagnetic interference.

To be suitable for use in the array module 2, referring to Figs. 1-11, the driving device 20 (first driving device 21a) according to the present invention may further have the following characteristics. In one example of the present invention, the connecting member 236 fixed at the third side portion 2313 is arranged at the side of the driving device 20 close to the second driving device 21b. The connecting member 236 may be composed of a material with magnetic conductive properties, so that the connecting member 236 can play a role in magnetic isolation, thereby reducing the electromagnetic interference between the driving device 20 and the second driving device 21b.

In one example of the present invention, as shown in Figs. 3 and 11, since the focusing position sensing element 2811 and the focusing circuit board 2812 are arranged above the first magnet 251, while the focusing position sensing element 2811, the focusing circuit board 2812 and the first magnet 251 are located in the extension direction of the first camera module 20a and the second camera module 20b, therefore, in order to enable the first part 2411, the second part 2412, the third part 2413 and the fourth part 2414 of the first spring plate 241 to respectively provide the focusing position sensing element 2811 and the focusing circuit board 2812 with conducting circuits, the first spring plate 241 is symmetrical about the extension direction of the first camera module 20a and the second camera module 20b, especially the second part 2412 and the third part 2413 are symmetrical about the extension direction of the first camera module 20a and the second camera module 20b, so that the second part 2412 and the third part 2413 can be electrically connected to the focusing circuit board 2812.

Furthermore, the side connection part 29 is also symmetrical about the extension direction of the first camera module 20a and the second camera module 20b, so that the first side spring plate 291, the second side spring plate 292, the third side spring plate 293 and the fourth side spring plate 294 of the side connection part 29 can be electrically connected to the first part 2411, the second part 2412, the third part 2413 and the fourth part 2414 of the first spring plate respectively. The first side spring plate 291 and the fourth side spring plate 254 are symmetrical about the extension direction of the first camera module 20a and the second camera module 20b, and the second side spring plate 292 and the third side spring plate 253 are symmetrical about the extension direction of the first camera module 20a and the second camera module 20b. Particularly, the first side spring plate 291 and the second side spring plate 292 are arranged at the side of the driving device 20 where the second magnet 252 is provided, and the third side spring plate 293 and the fourth side spring plate 294 are arranged t the side of the driving device 20 where the third magnet 253 is provided. The arrangement of the side connection part 29 can also provide sufficient configuration space for the ball 2011, thereby optimizing the spatial structure of the driving device 20.

The above describes the basic principles, main features and advantages of the present invention. A person skilled in the art should understand that, the present invention is not limited to the above-mentioned examples. The above examples and the specification only describe the principles of the present invention. Various changes and improvements may be made to the present invention without departing from the spirit and scope of the present invention. These changes and improvements shall fall within the protection scope the present invention. The protection scope of the application is defined by the appended claims and their equivalents.

## Claims

1. A driving device, comprising:
a fixing part;
an anti-shake frame, which is movably connected to the fixing part;
a focusing carrier, which is movably connected to the anti-shake frame;
a magnet part, which is arranged on the anti-shake frame;
a focusing coil part, which is arranged at the focusing carrier and is opposite to the magnet part;
an anti-shake coil part, which is arranged at the fixing part and is opposite to the magnet part; and
a focusing position sensing part, which comprises a focusing position sensing element and a focusing position sensing magnet, wherein the focusing position sensing element is arranged at one of the focusing carrier and the anti-shake frame, and the focusing position sensing magnet is arranged at the other of the focusing carrier and the anti-shake frame, and the focusing position sensing element is arranged opposite to the focusing position sensing magnet in a height direction.

2. The driving device as claimed in claim 1, wherein the focusing carrier comprises a carrier body and a side extension portion, and the side extension portion extends outward from the carrier body, and the focusing position sensing element is fixed at the side extension portion, and the focusing position sensing magnet is fixed at the top of the anti-shake frame, and the focusing position sensing element is located above the focusing position sensing magnet.

3. The driving device as claimed in claim 2, wherein the magnet part comprises a first magnet, and the anti-shake coil part comprises a first anti-shake coil, and the first anti-shake coil is fixed at the fixing part and is opposite to the first magnet.

4. The driving device as claimed in claim 3, wherein the magnet part further comprises a second magnet and a third magnet, and the second magnet and the third magnet are arranged opposite to each other at both sides of the first magnet, and the focusing coil part comprises a first focusing coil and a second focusing coil, and the first focusing coil is fixed at the focusing carrier and is opposite to the second magnet, and the second focusing coil is fixed at the focusing carrier and is opposite to the third magnet, and the anti-shake coil part further comprises a second anti-shake coil and a third anti-shake coil, and the second anti-shake coil is fixed at the fixing part and is opposite to the second magnet, and the third anti-shake coil is fixed at the fixing part and is opposite to the third magnet.

5. The driving device as claimed in claim 3 or 4, wherein the focusing position sensing part and the first magnet are located on the same side of the focusing carrier, and the focusing position sensing magnet is arranged above the first magnet.

6. The driving device as claimed in claim 5, wherein the first magnet comprises a first magnetic force part and a second magnetic force part, and the first magnetic force part and the second magnetic force part are stacked, and the second magnetic force part is located at the side of the first magnetic force part away from the focusing carrier, and the magnetic pole direction of the focusing position sensing magnet is the same as the magnetic pole direction of the first magnetic force part.

7. The driving device as claimed in claim 5, wherein the height of the top surface of the first magnet is lower than the heights of the top surfaces of the second magnet and the third magnet.

8. The driving device as claimed in claim 5, wherein the anti-shake frame further comprises a frame body and a first magnetic conductive member fixed at the frame body, and the first magnetic conductive member is arranged between the focusing position sensing magnet and the first magnet.

9. The driving device as claimed in claim 8, wherein the driving device further comprises a suspension part and a supporting part, and the suspension part connects the focusing carrier and the anti-shake frame so that the focusing carrier is suspended in the anti-shake frame, and the supporting part is arranged between the anti-shake frame and the fixing part, and the anti-shake frame is supported by the supporting part at the fixing part.

10. A camera module, comprising:
a photosensitive assembly;
an optical lenses, which is held on the photosensitive path of the photosensitive assembly; and
the driving device as claimed in any one of claims 1-9, wherein the driving device is suitable for driving the optical lenses to move.

11. A driving device, comprising:
a base, which comprises a base body and a magnetic attraction assembly arranged on the base body;
an anti-shake frame, which is movably connected to the base;
an anti-shake coil part, which is arranged at the base body; and
a magnet part, which is arranged at the anti-shake frame, wherein the magnet part is arranged opposite to the anti-shake coil part, and the magnet part comprises a first magnet, a second magnet and a third magnet, and the second magnet and the third magnet are arranged opposite to each other at both sides of the first magnet;
wherein the magnetic attraction assembly is only arranged opposite to the second magnet and the third magnet in a height direction.

12. The driving device as claimed in claim 11, wherein the magnetic attraction assembly comprises a first magnetic attraction part and a second magnetic attraction part, and the first magnetic attraction part and the second magnet are arranged opposite to each other in a height direction, and the second magnetic attraction part and the third magnet are arranged opposite to each other in a height direction.

13. The driving device as claimed in claim 12, wherein the first magnetic attraction part interacts with the second magnet to generate a first magnetic attraction force, and the second magnetic attraction part interacts with the third magnet to generate a second magnetic attraction force, and the first magnetic attraction force and the second magnetic attraction force are mutually symmetrical forces.

14. The driving device as claimed in claim 13, wherein the first magnetic attraction part and the second magnetic attraction part are arranged at opposite sides of the base body, and do not extend to the corners of the base body.

15. The driving device as claimed in claim 14, wherein the first magnetic attraction part and the second magnetic attraction part are provided at the side of the base body opposite to the second magnet and the third magnet, and the first magnetic attraction part and the second magnetic attraction part are not provided at the side of the base body opposite to the first magnet, and the first magnetic attraction part and the second magnetic attraction part are only attracted by the magnetic force of the second magnet and the third magnet, but not by the magnetic force of the first magnet.

16. The driving device as claimed in claim 15, wherein the first magnetic attraction part comprises a first magnetic attraction member and a second magnetic attraction member, and the first magnetic attraction member and the second magnetic attraction member are symmetrically arranged below the second magnet, and the second magnetic attraction part comprises a third magnetic attraction member and a fourth magnetic attraction member, and the third magnetic attraction member and the fourth magnetic attraction member are symmetrically arranged below the third magnet.

17. The driving device as claimed in claim 16, wherein the first magnetic attraction member and the second magnetic attraction member extend along the length direction of the second magnet, and the first magnetic attraction member and the second magnetic attraction member are arranged at intervals in the length direction of the second magnet, and the third magnetic attraction member and the fourth magnetic attraction member extend along the length direction of the third magnet, and the third magnetic attraction member and the fourth magnetic attraction member are arranged at intervals in the length direction of the third magnet.

18. The driving device as claimed in claim 17, wherein the first magnetic attraction member and the second magnetic attraction member are separately arranged along the length direction of the second magnet, and the first magnetic attraction member and the second magnetic attraction member are respectively located at two ends of the second magnet, and the third magnetic attraction member and the fourth magnetic attraction member are separately arranged along the length direction of the third magnet, and the third magnetic attraction member and the fourth magnetic attraction member are respectively located at two ends of the third magnet.

19. The driving device as claimed in claim 18, wherein the driving device further comprises a focusing carrier and a focusing coil part arranged at the focusing carrier, and the focusing coil part comprises a first focusing coil and a second focusing coil, and the first focusing coil and the second magnet are arranged opposite to each other in a horizontal direction, and the second focusing coil and the third magnet are arranged opposite to each other in a horizontal direction, and the anti-shake coil part comprises a first anti-shake coil, a second anti-shake coil and a third anti-shake coil, and the first anti-shake coil and the first magnet are arranged opposite to each other in a height direction, and the second anti-shake coil and the second magnet are arranged opposite to each other in a height direction, and the third anti-shake coil and the third magnet are arranged opposite to each other in a height direction.

20. A camera module, comprising:
a photosensitive assembly;
an optical lenses, which is held on the photosensitive path of the photosensitive assembly; and
the driving device as claimed in any one of claims 11-19, wherein the driving device is suitable for driving the optical lenses to move.

21. A driving device, comprising:
a fixing part;
an anti-shake frame, which is movably connected to the fixing part;
a focusing carrier, which is movably connected to the anti-shake frame;
a magnet part, which is arranged at the anti-shake frame;
a focusing coil part, which is arranged at the focusing carrier and is opposite to the magnet part;
an anti-shake coil part, which is arranged at the fixing part and is opposite to the magnet part; and
a focusing position sensing part, which comprises a focusing position sensing element and a focusing position sensing magnet arranged opposite to each other in a height direction, wherein the anti-shake frame comprises a frame body which comprises a first side portion, a second side portion, a third side portion and a fourth side portion sequentially arranged in a counterclockwise direction, and the second side portion and the fourth side portion are arranged opposite to each other at both sides of the first side portion, and the top surface of the first side portion is lower than the top surfaces of the second side portion and the fourth side portion, and the focusing position sensing magnet is arranged at the first side portion.

22. The driving device as claimed in claim 21, wherein the focusing carrier comprises a carrier body and a side extension portion, and the side extension portion extends outward from the carrier body, and the focusing position sensing element is fixed at the side extension portion, and the focusing position sensing magnet is fixed at the top of the first side portion, and the focusing position sensing element is located above the focusing position sensing magnet.

23. The driving device as claimed in claim 22, wherein the magnet part comprises a first magnet, a second magnet and a third magnet, and the first magnet is fixed at the first side portion, and the second magnet is fixed at the second side portion, and the third magnet is fixed at the fourth side portion, and the anti-shake coil part comprises a first anti-shake coil, a second anti-shake coil and a third anti-shake coil, and the first anti-shake coil is fixed at the fixing part and is opposite to the first magnet, and the second anti-shake coil is fixed at the fixing part and is opposite to the second magnet, and the third anti-shake coil is fixed at the fixing part and is opposite to the third magnet, and the focusing coil part comprises a first focusing coil and a second focusing coil, and the first focusing coil is fixed at the focusing carrier and is opposite to the second magnet, and the second focusing coil is fixed at the focusing carrier and is opposite to the third magnet.

24. The driving device as claimed in claim 23, wherein the height of the top surface of the first magnet is lower than the heights of the top surfaces of the second magnet and the third magnet, and the focusing position sensing magnet is arranged above the first magnet.

25. The driving device as claimed in claim 23, wherein the first magnet comprises a first magnetic force part and a second magnetic force part, and the first magnetic force part and the second magnetic force part are stacked, and the second magnetic force part is located at the side of the first magnetic force part away from the focusing carrier, and the magnetic pole direction of the focusing position sensing magnet is the same as the magnetic pole direction of the first magnetic force part.

26. The driving device as claimed in claim 23, wherein the anti-shake frame further comprises a first magnetic conductive member fixed at the first side portion, and the first magnetic conductive member is arranged between the focusing position sensing magnet and the first magnet.

27. The driving device as claimed in any one of claims 21-26, wherein the driving device further comprises a first spring plate, and the first spring plate connects the focusing carrier and the anti-shake frame so that the focusing carrier is suspended in the anti-shake frame, and the first spring plate comprises a first part, a second part, a third part and a fourth part sequentially arranged in a counterclockwise direction, and the first part and the second part, and the fourth part and the third part, are symmetrically arranged at both sides, and the focusing position sensing element is arranged between the first part and the fourth part.

28. The driving device as claimed in claim 27, wherein the focusing position sensing part further comprises a focusing circuit board providing a conducting circuit for the focusing position sensing element, and the first part, the second part, the third part and the fourth part are electrically connected to the focusing circuit board respectively.

29. The driving device as claimed in claim 28, further comprising a supporting part, wherein the supporting part is arranged between the anti-shake frame and the fixing part, and the anti-shake frame is supported by the supporting part at the fixing part.

30. A camera module, comprising:
a photosensitive assembly;
an optical lenses, which is held on the photosensitive path of the photosensitive assembly; and
the driving device as claimed in any one of claims 21-29, wherein the driving device is suitable for driving the optical lenses to move.
